# EUROPEAN PATENT APPLICATION

(11) **EP 4 261 673 A1**
(43) Date of publication of application: **18.10.2023**
(21) Application number: 21914622.2
(22) Date of filing: 30.12.2021
(51) Int. Cl.: G06F 3/14

(54) **FOCAL POINT SYNCHRONIZATION METHOD AND ELECTRONIC DEVICE**

(30) Priority: 31.12.2020 CN 202011639403
(71) Applicant: Huawei Technologies Co., Ltd., Shenzhen, Guangdong 518129 (CN)
(72) Inventor: GAO, Changlei, Shenzhen, Guangdong 518129 (CN); HE, Shujie, Shenzhen, Guangdong 518129 (CN); LEI, Liang, Shenzhen, Guangdong 518129 (CN)
(74) Representative: Huawei European IPR
(86) International application number: PCT/CN2021/143044
(87) International publication number: WO 2022/143891

(57) **Abstract**

Embodiments of this application provide a focus synchronization method, applied to a communication system. The communication system includes a first electronic device and a second electronic device. A communication connection is established between the first electronic device and the second electronic device. The method includes: The second electronic device displays a plurality of windows, where a second application is a focus application of the first electronic device. The first electronic device detects a first focus switching event, and switches the focus application from the second application to a third application. The second electronic device sets a third window as a focus window, where the third window is a window for displaying a user interface of the third application. Implementation of embodiments of this application is conducive to synchronization of a focus between the first electronic device and the second electronic device. This improves user experience of using the first electronic device and the second electronic device by a user.

## Description

This application claims priority to Chinese Patent Application No. 202011639403.2, filed with the China National Intellectual Property Administration on December 31, 2020 and entitled "FOCUS SYNCHRONIZATION METHOD AND ELECTRONIC DEVICE", which is incorporated herein by reference in its entirety.

### TECHNICAL FIELD

This application relates to the field of electronic technologies, and in particular, to a focus synchronization method and an electronic device.

### BACKGROUND

With rapid development of electronic technologies, usage scenarios of electronic devices are increasing, and people use an increasing variety of electronic devices. Currently, people may switch between different devices as required in different scenarios. For example, a user owns a mobile phone and a personal computer. The user may send and receive messages on the mobile phone and work on the personal computer. When the user wants to view information on different devices at the same time, the user may project display content on the different devices to one display device. For example, the user may project content on the mobile phone to the computer, to view, on the larger display device, the content on the mobile phone.

### SUMMARY

According to a first aspect, this application provides a focus synchronization method, applied to a communication system. The communication system includes a first electronic device and a second electronic device, and a communication connection is established between the first electronic device and the second electronic device. The method includes: The second electronic device displays a plurality of windows, where each of the plurality of windows displays a user interface of an application; the application is installed and runs on the first electronic device; a first window in the plurality of windows displays a first user interface of a first application, a second user interface of the first application is displayed on the first electronic device, and the first user interface and the second user interface have a same user interface element; a second window in the plurality of windows is a focus window, and the second window displays a user interface of a second application; and the second application is a focus application of the first electronic device. The first electronic device detects a first focus switching event, and switches the focus application from the second application to a third application. The second electronic device sets a third window as the focus window, where the third window is a window for displaying a user interface of the third application.

That the first user interface and the second user interface have a same user interface element may be understood as that the first user interface and the second user interface have same display content. For example, the first user interface and the second user interface may be two user interfaces that have different sizes and include completely same display content; or title bars of the first user interface and the second user interface are different, and remaining parts except the title bar are the same. The user may obtain same information about the first application from the first user interface and the second user interface.

The first focus switching event is an operation of starting/switching to the third application. Alternatively, the first focus switching event is an operation of opening/switching to the third window.

That the first electronic device detects a first focus switching event may include two cases. In the first case, the first electronic device detects the first focus switching event through the second electronic device. In the second case, the first electronic device does not detect the first focus switching event through the second electronic device. For the first case, for example, the second electronic device detects a click operation of a cursor on the third window, and in response to the click operation, the second electronic device generates focus switching data based on the click operation. The second electronic device sends the focus switching data to the first electronic device, indicating that the first electronic device detects the first focus switching event. For the second case, for example, when the first electronic device detects a touch operation on an icon of the third application performed on a display screen of the first electronic device, it is considered that the first electronic device detects the first focus switching event.

For the step that the first electronic device detects a first focus switching event and switches the focus application from the second application to a third application and the step that the second electronic device sets a third window as the focus window where the third window is a window for displaying the user interface of the third application, a time sequence of the two steps is not limited in this example.

It can be learned that in embodiments of this application, the focus application and the focus window may be synchronized between the first electronic device and the second electronic device, which helps improve user experience of a user in switching between using the first electronic device and the second electronic device.

With reference to the first aspect, in a possible implementation, the method further includes: When the focus application is the second application: the second electronic device detects a first user input; and the second electronic device updates the user interface of the second application. When the focus application is the third application: the second electronic device detects a second user input; and the second electronic device updates the user interface of the third application.

The user input may be data content/instruction, such as text information, voice information, and page turning, that is entered by a user for a single application.

It can be learned that when the second electronic device detects the user input, in response to the user input, the second electronic device updates the user interface of the focus application based on the user input.

With reference to the first aspect, in a possible implementation, after the switching the focus application from the second application to a third application, the method further includes: The first electronic device detects a second focus switching event, and switches the focus application from the third application to the first application. The second electronic device sets the first window as the focus window. The second electronic device detects a third user input. The second electronic device updates the first user interface of the first application. The first electronic device updates the second user interface of the first application.

The second focus switching event is an operation of starting/switching to the first application.

It can be learned that, when the focus application is the first application and the user input is detected, both the first electronic device and the second electronic device may update the user interface of the first application, to implement synchronization of the user interfaces of the first application displayed by the first electronic device and the second electronic device.

With reference to the first aspect, in a possible implementation, after the second electronic device detects a first user input, and before the second electronic device updates the user interface of the second application, the method further includes: The second electronic device sends, to the first electronic device, a first data packet generated based on the first user input. The first electronic device processes data of the second application based on the first data packet, to obtain first display data of the second application. The first electronic device sends the first display data to the second electronic device.

With reference to the first aspect, in a possible implementation, that the second electronic device updates the user interface of the second application includes: The second electronic device updates the user interface of the second application from a third user interface to a fourth user interface based on the first display data, where the third user interface is different from the fourth user interface.

The third user interface and the fourth user interface may be two user interfaces on which display content are completely different; or the third user interface and the fourth user interface may be two user interfaces on which display content are partially different.

With reference to the first aspect, in a possible implementation, after the second electronic device detects a second user input, and before the second electronic device updates the user interface of the third application, the method further includes: The second electronic device sends, to the first electronic device, a second data packet generated based on the second user input. The first electronic device processes data of the third application based on the second data packet, to obtain second display data of the third application. The first electronic device sends the second display data to the second electronic device.

With reference to the first aspect, in a possible implementation, that the second electronic device updates the user interface of the third application includes: The second electronic device updates the user interface of the third application from a fifth user interface to a sixth user interface based on the second display data, where the fifth user interface is different from the sixth user interface.

The fifth user interface and the sixth user interface may be two user interfaces on which display content are completely different; or the fifth user interface and the sixth user interface may be two user interfaces on which display content are partially different.

With reference to the first aspect, in a possible implementation, the first user input is the same as the second user input, and the first user input and the second user input are pressing operations on a first key.

For example, the first key may be an ESC key on a keyboard.

With reference to the first aspect, in a possible implementation, after the switching the focus application from the second application to a third application, and before the second electronic device sets a third window as the focus window, the method further includes: The first electronic device displays the user interface of the third application. The first electronic device sends first focus switching data to the second electronic device, where the first focus switching data is generated by the first electronic device in response to the first focus switching event.

With reference to the first aspect, in a possible implementation, the first electronic device stores a reference status identifier and a reference identity, and after the switching the focus application from the second application to a third application, and before the first electronic device sends first focus switching data to the second electronic device, the method further includes: if the reference status identifier is a first status identifier and a first identity of the third application is different from the reference identity, updating the reference status identifier to a second status identifier; or if the reference status identifier is a second status identifier, generating the first focus switching data based on the first identity; where if the reference status identifier is the first status identifier, it indicates that before the first electronic device switches the focus application to the third application, the first electronic device sets the second application as the focus application based on third focus switching data sent by the second electronic device; and if the reference status identifier is the second status identifier, it indicates that before the first electronic device switches the focus application to the third application, the first electronic device sets the second application as the focus application based on a third focus switching event detected by the first electronic device.

The third focus switching event is an operation of starting/switching to the second application.

It can be learned that the first electronic device may determine, based on the reference status identifier and the reference identity, whether to perform a subsequent focus synchronization operation, thereby avoiding a case in which the first electronic device and the second electronic device repeatedly set a focus for a same application.

With reference to the first aspect, in a possible implementation, after the second electronic device sets the second window as the focus window, and before the switching the focus application from the second application to a third application, the method further includes: The second electronic device sends second focus switching data to the first electronic device, where the second focus switching data is generated by the second electronic device in response to the first focus switching event.

With reference to the first aspect, in a possible implementation, the first electronic device stores a reference status identifier and a reference identity, and after the switching the focus application from the second application to a third application, the method further includes: updating the reference status identifier to a first status identifier; and updating the reference identity to an identity of the third application; where if the reference status identifier is the first status identifier, it indicates that the focus application is set by the first electronic device based on fourth focus switching data sent by the second electronic device; and if the reference status identifier is a second status identifier, it indicates that the focus application is set by the first electronic device based on a fourth focus switching event detected by the first electronic device.

With reference to the first aspect, in a possible implementation, that the second electronic device sets a third window as the focus window includes: The second electronic device marks the third window.

The second electronic device marks the focus window, so that a user can identify the focus window from the plurality of windows.

With reference to the first aspect, in a possible implementation, that the second electronic device marks the third window includes one or more of the following: the second electronic device sets a title bar of the third window to a highlighted state; and the second electronic device adjusts a transparency of the third window.

With reference to the first aspect, in a possible implementation, after the first electronic device sends first focus switching data to the second electronic device, the method further includes: The second electronic device determines that the plurality of windows meet a preset condition.

The preset condition may be that the plurality of windows are in a specified mode, for example, the mode may include a full-screen mode and a non-full-screen mode. The preset condition may be that the plurality of windows are in the non-full-screen mode.

With reference to the first aspect, in a possible implementation, before the first electronic device sends first focus switching data to the second electronic device, the method further includes: The first electronic device obtains status data of the plurality of windows. The first electronic device determines, based on the status data, that the plurality of windows meet a preset condition.

The second electronic device may send the status data of the plurality of windows to the first electronic device.

The preset condition may be that the plurality of windows are in a specified mode, for example, the mode may include a full-screen mode and a non-full-screen mode. The preset condition may be that the plurality of windows are in the non-full-screen mode.

With reference to the first aspect, in a possible implementation, the preset condition includes one or more of the following: the plurality of windows do not include a full-screen window; and none of the plurality of windows is in a media playback state.

For example, the media playback state may be a state of playing a video, a state of browsing a document in full screen, or the like.

With reference to the first aspect, in a possible implementation, before the first electronic device detects a first focus switching event, the plurality of windows include the third window, and the third window displays the user interface of the third application.

According to a second aspect, an embodiment of this application provides a focus synchronization method, applied to a first electronic device. A communication connection is established between the first electronic device and a second electronic device. The second electronic device is configured to display a plurality of windows, and each of the plurality of windows displays a user interface of an application. The application is installed and runs on the first electronic device. A first window in the plurality of windows displays a first user interface of a first application, a second user interface of the first application is displayed on the first electronic device, and the first user interface and the second user interface have a same user interface element. A second window in the plurality of windows is a focus window, and the second window displays a user interface of a second application. The second application is a focus application of the first electronic device. The method includes: The first electronic device detects a first focus switching event, and switches the focus application from the second application to a third application.

With reference to the second aspect, in a possible implementation, the method further includes: When the focus application is the second application: the first electronic device receives a first data packet sent by the second electronic device and generated based on a first user input; the first electronic device generates first display data based on the first data packet; and the first electronic device sends the first display data to the second electronic device, where the first display data is used to update the user interface of the second application on the second electronic device. When the focus application is the third application: the first electronic device receives a second data packet sent by the second electronic device and generated based on a second user input; the first electronic device generates second display data based on the second data packet; and the first electronic device sends the second display data to the second electronic device, where the second display data is used to update the user interface of the second application on the second electronic device.

With reference to the second aspect, in a possible implementation, after the switching the focus application from the second application to a third application, the method further includes: The first electronic device detects a second focus switching event, and switches the focus application from the third application to the first application. The first electronic device receives a data packet sent by the second electronic device and including a data packet input by a third user. The first electronic device generates third display data based on the data packet input by the third user. The first electronic device updates the first user interface of the first application.

With reference to the second aspect, in a possible implementation, after the switching the focus application from the second application to a third application, the method further includes: The first electronic device displays the user interface of the third application. The first electronic device sends first focus switching data to the second electronic device, where the first focus switching data is generated by the first electronic device in response to the first focus switching event.

With reference to the second aspect, in a possible implementation, the first electronic device stores a reference status identifier and a reference identity, and after the switching the focus application from the second application to a third application, and before the first electronic device sends first focus switching data to the second electronic device, the method further includes: if the reference status identifier is a first status identifier and a first identity of the third application is different from the reference identity, updating the reference status identifier to a second status identifier; or if the reference status identifier is a second status identifier, generating the first focus switching data based on the first identity; where if the reference status identifier is the first status identifier, it indicates that before the first electronic device switches the focus application to the third application, the first electronic device sets the second application as the focus application based on third focus switching data sent by the second electronic device; and if the reference status identifier is the second status identifier, it indicates that before the first electronic device switches the focus application to the third application, the first electronic device sets the second application as the focus application based on a third focus switching event detected by the first electronic device.

With reference to the second aspect, in a possible implementation, before the first electronic device sends first focus switching data to the second electronic device, the method further includes: The first electronic device obtains status data of the plurality of windows. The first electronic device determines, based on the status data, that the plurality of windows meet a preset condition.

With reference to the second aspect, in a possible implementation, the preset condition includes one or more of the following: the plurality of windows do not include a full-screen window; and none of the plurality of windows is in a media playback state.

With reference to the second aspect, in a possible implementation, before the first electronic device detects a first focus switching event, the plurality of windows include the third window, and the third window displays the user interface of the third application.

According to a third aspect, an embodiment of this application provides a focus synchronization method, applied to a second electronic device. A communication connection is established between the second electronic device and a first electronic device. The method includes: The second electronic device displays a plurality of windows, where each of the plurality of windows displays a user interface of an application; the application is installed and runs on the first electronic device; a first window in the plurality of windows displays a first user interface of a first application, a second user interface of the first application is displayed on the first electronic device, and the first user interface and the second user interface have a same user interface element; a second window in the plurality of windows is a focus window, and the second window displays a user interface of a second application; and the second application is a focus application of the first electronic device. The second electronic device sets a third window as the focus window, where the third window is a window for displaying a user interface of a third application.

With reference to the third aspect, in a possible implementation, the method further includes: When the focus window is the second window: the second electronic device detects a first user input; and the second electronic device updates the user interface of the second application. When the focus window is the third window: the second electronic device detects a second user input; and the second electronic device updates the user interface of the third application.

With reference to the third aspect, in a possible implementation, after the second electronic device detects a first user input, and before the second electronic device updates the user interface of the second application, the method further includes: The second electronic device sends, to the first electronic device, a first data packet generated based on the first user input. The second electronic device receives first display data sent by the first electronic device.

With reference to the third aspect, in a possible implementation, that the second electronic device updates the user interface of the second application includes: The second electronic device updates the user interface of the second application from a third user interface to a fourth user interface based on the first display data, where the third user interface is different from the fourth user interface.

With reference to the third aspect, in a possible implementation, after the second electronic device detects a second user input, and before the second electronic device updates the user interface of the third application, the method further includes: The second electronic device sends, to the first electronic device, a second data packet generated based on the second user input. The second electronic device receives second display data sent by the first electronic device.

With reference to the third aspect, in a possible implementation, that the second electronic device updates the user interface of the third application includes: The second electronic device updates the user interface of the third application from a fifth user interface to a sixth user interface based on the second display data, where the fifth user interface is different from the sixth user interface.

With reference to the third aspect, in a possible implementation, the first user input is the same as the second user input, and the first user input and the second user input are pressing operations on a first key.

With reference to the third aspect, in a possible implementation, before the second electronic device sets a third window as the focus window, the method further includes: The second electronic device receives first focus switching data sent by the first electronic device.

With reference to the third aspect, in a possible implementation, after the second electronic device sets the second window as the focus window, the method further includes: The second electronic device sends second focus switching data to the first electronic device, where the second focus switching data is generated by the second electronic device in response to the first focus switching event.

With reference to the third aspect, in a possible implementation, that the second electronic device sets a third window as the focus window includes: The second electronic device marks the third window.

With reference to the third aspect, in a possible implementation, that the second electronic device marks the third window includes one or more of the following: the second electronic device sets a title bar of the third window to a highlighted state; and the second electronic device adjusts a transparency of the third window.

With reference to the third aspect, in a possible implementation, after the first electronic device sends first focus switching data to the second electronic device, the method further includes: The second electronic device determines that the plurality of windows meet a preset condition.

With reference to the third aspect, in a possible implementation, the preset condition includes one or more of the following: the plurality of windows do not include a full-screen window; and none of the plurality of windows is in a media playback state.

With reference to the third aspect, in a possible implementation, before the second electronic device sets the third window as the focus window, the plurality of windows include the third window, and the third window displays the user interface of the third application.

According to a fourth aspect, an embodiment of this application provides an electronic device. The electronic device includes one or more processors and a memory. The memory is coupled to the one or more processors. The memory is configured to store computer program code. The computer program code includes computer instructions. The one or more processors invoke the computer instructions to enable the electronic device to perform the second aspect and any possible implementation of the second aspect, or the third aspect and any possible implementation of the third aspect.

According to a fifth aspect, an embodiment of this application provides a communication system. The communication system includes a first electronic device and a second electronic device, where the first electronic device and/or the second electronic device include/includes one or more processors and a memory. The memory is coupled to the one or more processors. The memory is configured to store computer program code. The computer program code includes computer instructions. The one or more processors invoke the computer instructions to enable the first electronic device and/or the second electronic device to perform the first aspect and any possible implementation of the first aspect.

According to a sixth aspect, a chip system is provided. The chip system is applied to an electronic device. The chip system includes one or more processors. The processor is configured to invoke computer instructions to enable the electronic device to perform the first aspect and any possible implementation of the first aspect, or the second aspect and any possible implementation of the second aspect, or the third aspect and any possible implementation of the third aspect.

According to a seventh aspect, this application provides a computer program product, where when the computer program product runs on an electronic device, the electronic device is enabled to perform the first aspect and any possible implementation of the first aspect, or the second aspect and any possible implementation of the second aspect, or the third aspect and any possible implementation of the third aspect.

According to an eighth aspect, this application provides a computer-readable storage medium, where the computer-readable storage medium includes computer instructions, and when the computer instructions are run on an electronic device, the electronic device is enabled to perform the first aspect and any possible implementation of the first aspect, or the second aspect and any possible implementation of the second aspect, or the third aspect and any possible implementation of the third aspect.

### BRIEF DESCRIPTION OF DRAWINGS

To describe technical solutions in embodiments of this application more clearly, the following describes the accompanying drawings used in embodiments of this application.
FIG. 1A-1 to FIG. 1F-2 are schematic state diagrams of a group of electronic devices according to an embodiment of this application;
FIG. 2 is a schematic flowchart of a focus synchronization method according to an embodiment of this application;
FIG. 3A and FIG. 3B is a schematic flowchart of some steps of a focus synchronization method according to an embodiment of this application;
FIG. 4A-1 to FIG. 4B-2 are schematic state diagrams of a group of electronic devices according to an embodiment of this application;
FIG. 5A-1 to FIG. 5C-2 are schematic state diagrams of a group of electronic devices according to an embodiment of this application;
FIG. 6A-1 to FIG. 6D-2 are schematic state diagrams of a group of electronic devices according to an embodiment of this application;
FIG. 7 is a schematic flowchart of a focus synchronization method according to an embodiment of this application;
FIG. 8A-1 to FIG. 8C-2 are schematic state diagrams of a group of electronic devices according to an embodiment of this application;
FIG. 9A-1 to FIG. 9C-2 are schematic state diagrams of a group of electronic devices according to an embodiment of this application;
FIG. 10 is a schematic structural diagram of an electronic device 100 according to an embodiment of this application; and
FIG. 11 is a block diagram of a software structure of an electronic device 100 according to an embodiment of this application.

### DESCRIPTION OF EMBODIMENTS

Terms used in the following embodiments of this application are merely intended to describe specific embodiments, and are not intended to limit this application. Terms "one", "a/an", "the", "the foregoing", "this", and "the one" of singular forms used in this specification and the appended claims of this application are also intended to include plural forms, unless clearly specified otherwise in the context. In addition, it should be understood that a term "and/or" used in this application indicates and includes any one or all of possible combinations of one or more listed items.

In the following, terms "first" and "second" are merely intended for description, and shall not be understood as an indication or implication of relative importance or implicit indication of a quantity of indicated technical features. Therefore, a feature limited by "first" or "second" may explicitly or implicitly include one or more features. In the descriptions of embodiments of this application, unless specified otherwise, "a plurality of" means two or more than two.

In some embodiments, an electronic device may simultaneously start a plurality of applications, and may open a plurality of windows, and display a user interface of one application in each of the plurality of windows. When an electronic device opens a plurality of windows, the electronic device may set one of the windows as a focus window, and set an application corresponding to the focus window as a focus application (for example, if a user interface of an application F1 is displayed in the focus window, an application corresponding to the focus window is the application F1). When the electronic device detects an operation on the electronic device (for example, the electronic device is communicatively connected to a keyboard and a mouse, a user may press a page flipping key on the keyboard to implement a page flipping function, or may turn a mouse wheel to implement a page flipping function), the electronic device processes data of the focus application based on the operation, to meet the user's needs. An operating system (for example, a Microsoft Windows (Microsoft^{™} Windows) operating system or an Android (Android^{™}) operating system) having a multi-task processing capability has a function property of setting a focus window/focus application when a plurality of windows/a plurality of applications are started.

The focus application and the focus window are explained below. The focus application may be defined differently in different operating systems. For example, in an Android operating system, the focus application may be a focused application (Focused application). For example, the focus application may have the following function: When an electronic device runs a plurality of applications, the electronic device may set one of the applications as the focus application. Next, when detecting an operation that meets a condition (for example, a user touches a touchable area on a display screen, a user uses a keyboard or a mouse to enter an operation instruction), the electronic device processes data of the focus application based on the operation that meets the condition. It can be learned that when an electronic device runs a plurality of applications, a method for setting a focus application can enable the electronic device to accurately determine an application that needs to perform data processing, thereby avoiding errors with data processing objects.

The focus window may have different definitions in different systems. For example, in a Microsoft Windows (Microsoft Windows) system, the focus window is an active window (Active window), and the active window has a focus. The focus window may have the following function: The electronic device may determine to-be-processed data based on an operation that meets a preset condition and content displayed on the focus window, and perform a data processing operation on the to-be-processed data. In embodiments of this application, a focus window and a non-focus window that are set by the electronic device have different display effects, so that a user can identify the focus window and the non-focus window. For example, the electronic device may change a transparency of the focus window to distinguish the focus window from the non-focus window. Alternatively, the electronic device may set a title bar of the focus window to a highlighted state, or the electronic device changes a size, a thickness, a color value, or the like of characters in a title bar of the focus window. In this way, when browsing a plurality of windows on the electronic device, the user may determine the focus window from the plurality of windows.

In some embodiments, an electronic device 100 is communicatively connected to an electronic device 200, and a display interface of the electronic device 200 is greater than a display interface of the electronic device 100. The display interface refers to all displayable areas on a display screen. The electronic device 100 may run at least one application at same time. The electronic device 100 sends display data to the electronic device 200 when being communicatively connected to the electronic device 200. The electronic device 200 displays a window of the at least one application on a display screen of the electronic device 200 based on the display data, so that a user can view and operate the at least one application on the electronic device 200, thereby implementing coordination between the electronic devices. The user may view and operate the at least one application through both the electronic device 100 and the electronic device 200. Therefore, efficiency of viewing and operating the at least one application by the user is improved, and user experience is improved.

When the user performs an operation on a target application of the at least one application on the electronic device 200, the electronic device 200 generates response data based on the operation of the user, and then sends the response data to the electronic device 100. The electronic device 100 performs a corresponding operation on the target application based on the response data.

When the electronic device 100 simultaneously runs a plurality of applications, the electronic device 200 displays, based on display data of the electronic device 100, a plurality of windows corresponding to the plurality of applications. A window displayed on a display interface of the electronic device 100 is a window W1, the window W1 displays a user interface of an application F1, and the application F1 is a focus application set by the electronic device 100. The electronic device 200 sets a window W2 that is last operated by the user as a focus window, and the window W2 displays a user interface of an application F2. If the application F1 and the application F2 are a same application, the user may implement seamless operation switching between the electronic device 100 and the electronic device 200, and the electronic device 100 processes the focus application based on the operations performed by the user on the electronic device 100 and the electronic device 200, to meet the user's needs. However, when the application F1 and the application F2 are different applications, the user may perform an operation on the electronic device 200, and the operation is an operation on the application F2 in the window W2. The electronic device 200 generates response data based on the operation, and then sends the response data to the electronic device 100. Because the focus application set by the electronic device 100 is the application F1, the electronic device 100 may perform a data processing operation on the application F1 based on the response data, causing an error with a processing object.

In some embodiments, a plurality of applications may always run on the electronic device 100, and the electronic device 200 is configured to display only windows of the plurality of applications.

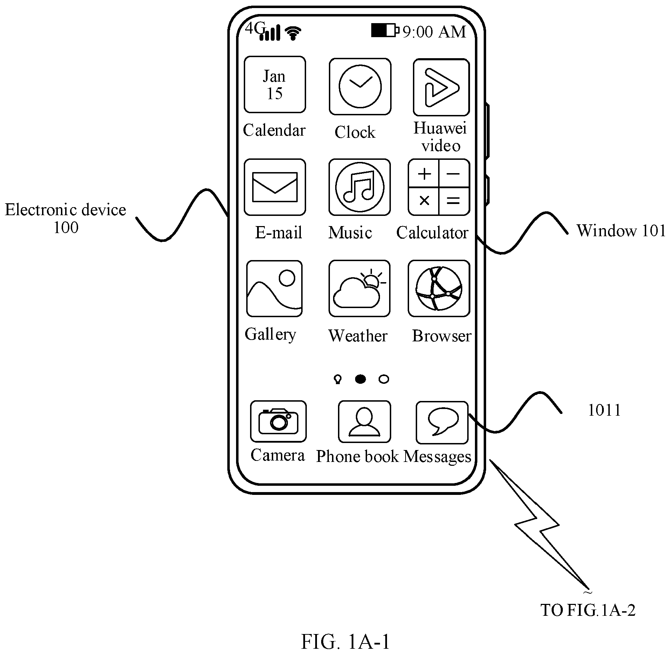

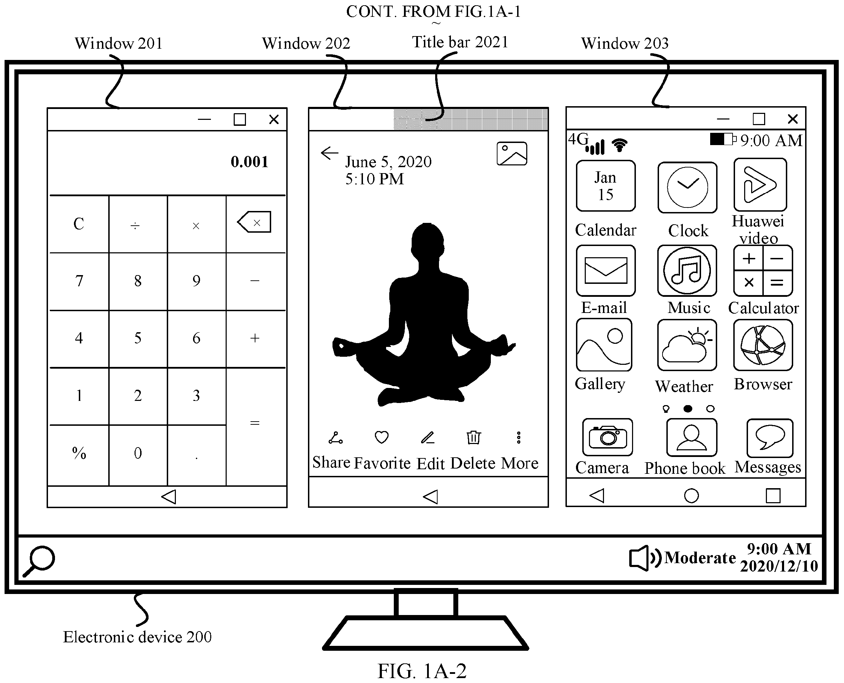

For example, refer to FIG. 1A-1 and FIG. 1A-2. FIG. 1A-1 and FIG. 1A-2 include an electronic device 100 and an electronic device 200. As shown in the figure, the electronic device 100 is communicatively connected to the electronic device 200. A display screen of the electronic device 100 includes a window 101. The electronic device 100 sends display data to the electronic device 200 in real time. The electronic device 200 displays three windows based on the display data. The three windows are a window 201, a window 202, and a window 203. The window 201 displays a user interface of a calculator application. The window 202 displays a user interface of a Gallery application. The window 203 is a main window, and display content of the window 203 is the same as that of the window 101. That is, the user interface displayed on the window 203 and the user interface displayed on the window 101 have a same user interface element. For example, both the window 203 and the window 101 in FIG. 1A-1 and FIG. 1A-2 include icons of applications such as Calendar, Clock, and Huawei Video. It should be noted that the main window is one of the plurality of windows displayed on the electronic device 200 based on the display data sent by the electronic device 100, and some/all display content of the main window 203 is the same as some/all display content of the window 101 of the electronic device 100. It should be noted that title bars of the plurality of windows displayed on the electronic device 200 may include names of applications.

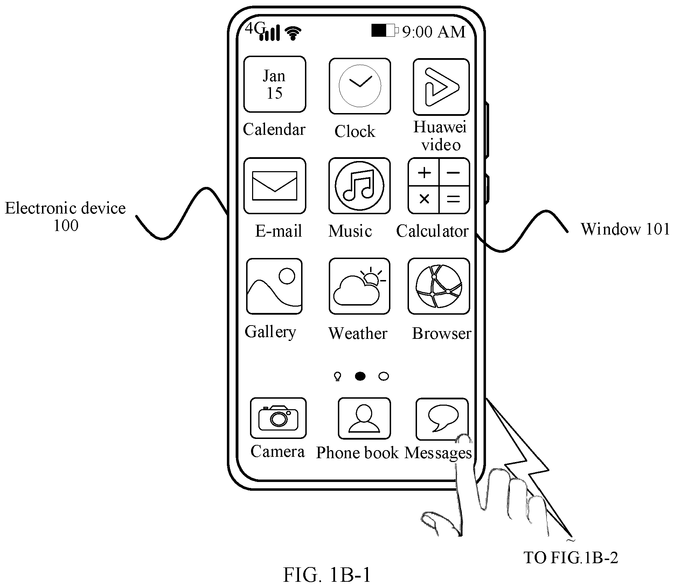

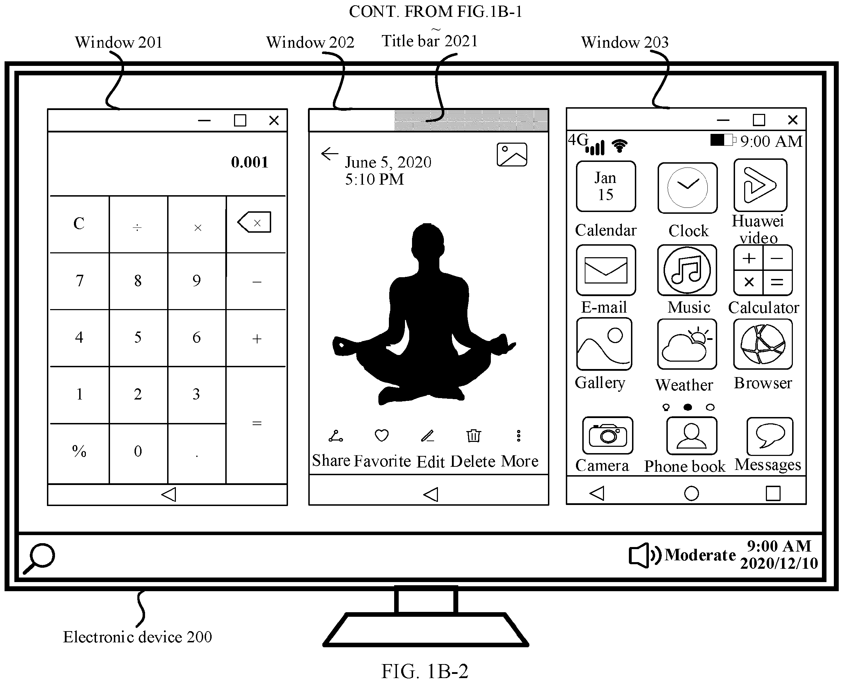

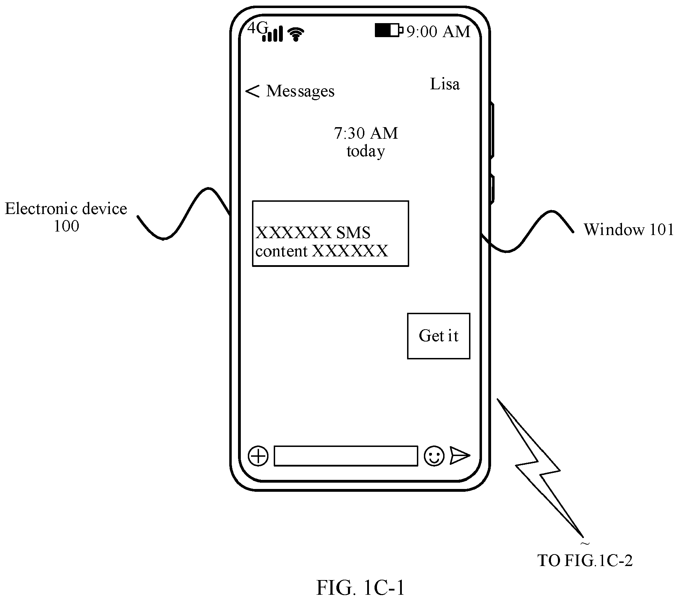

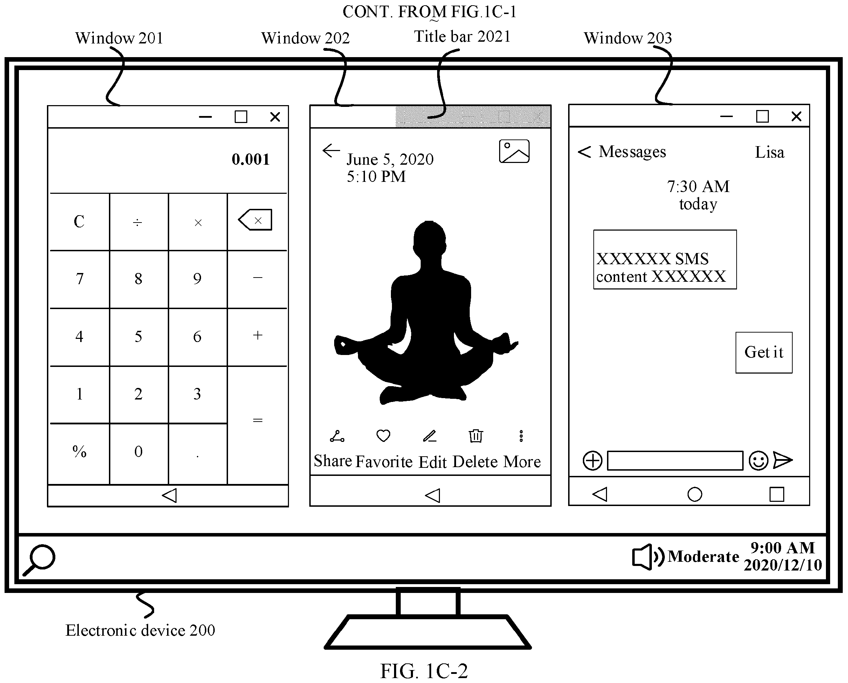

In FIG. 1A-2, the title bar 2021 of the window 202 is in a highlighted state, that is, the focus window set by the electronic device 200 is the window 202. This indicates that the latest operation performed by the user on the electronic device 200 is an operation on the window 202 corresponding to Gallery. In a case shown in FIG. 1A-1 and FIG. 1A-2, referring to FIG. 1B-1 and FIG. 1B-2, the electronic device 100 detects a touch operation performed by a user on an icon 1011 of a Messages application in a window 101 (it should be noted that the user may implement a same effect as the touch operation through an interaction manner such as a voice or a gesture). The electronic device 100 opens the Messages application in response to the touch operation performed on the icon 1011 of the Messages application, and updates a user interface of the window 101 to the user interface of the Messages application. In addition, because the electronic device 200 may receive, in real time, display data sent by the electronic device 100, the electronic device 200 updates, based on the display data, the user interface of the window 203 to the user interface of the Messages application. Specifically, refer to FIG. 1C-1 and FIG. 1C-2. FIG. 1C-1 and FIG. 1C-2 are a schematic diagram after the user interfaces of the window 101 and the window 203 are updated to the user interfaces of the Messages application. It should be noted that in FIG. 1B-1 and FIG. 1B-2, before the electronic device 100 detects the touch operation on the icon 1011 of the Messages application in the window 101, the Messages application is already in a background running state, and the user interface of the Messages application recorded in the background is a chat interface with a contact "Lisa" (specifically, before the case shown in FIG. 1A-1 and FIG. 1A-2, the electronic device 100 has started the Messages application, and directly returns, from the chat interface with the contact "Lisa", to a user interface of a main window shown in the window 101 in FIG. 1A-1). Therefore, after detecting the touch operation on the icon 1011 of the Messages application, the electronic device 100 displays the chat interface with the contact "Lisa" in the window 101.

In a case shown in FIG. 1C-1 and FIG. 1C-2, because the latest operation performed by the user is an operation performed on the Messages application on the electronic device 100, the electronic device 100 sets the Messages application as the focus application. In this case, the focus window of the electronic device 200 is still the window 202, that is, the window corresponding to the Gallery application.

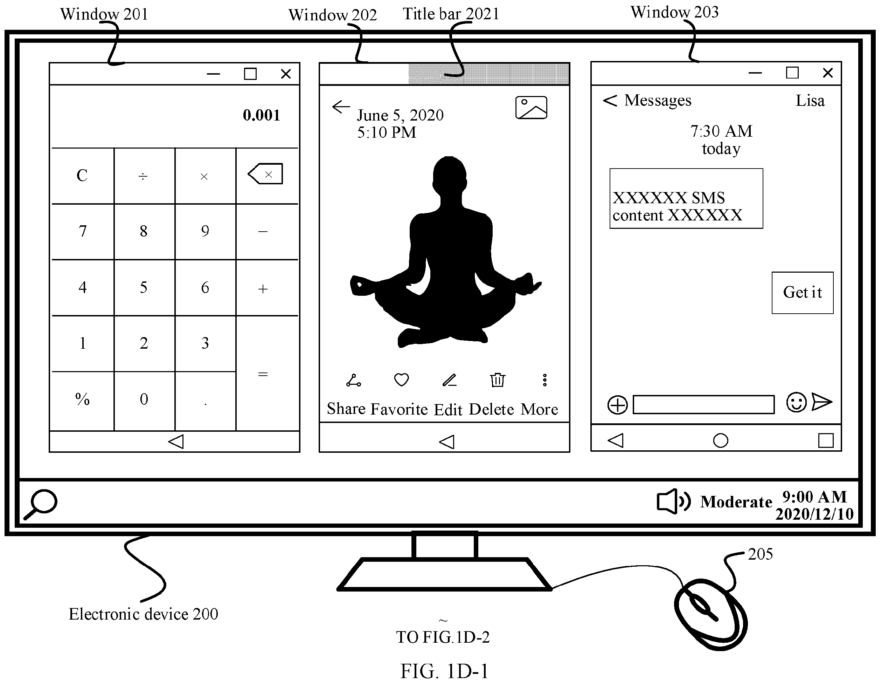

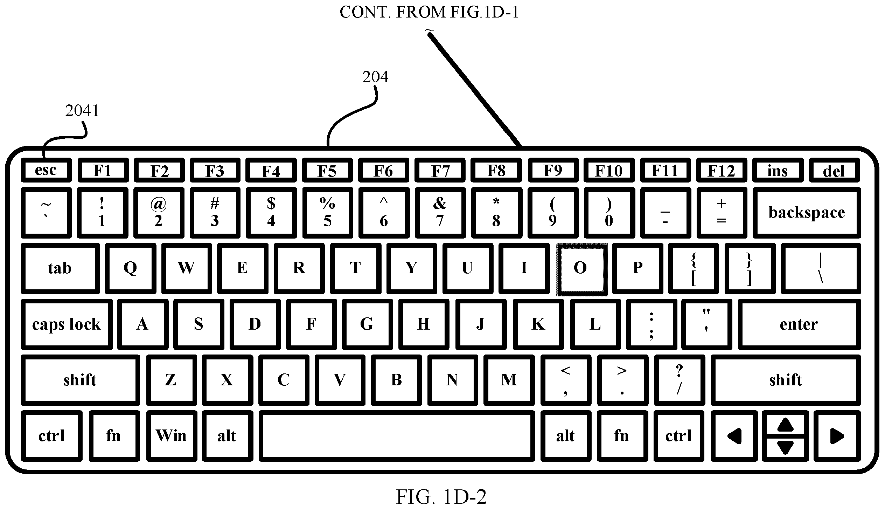

As shown in FIG. 1D-1 and FIG. 1D-2, the electronic device 200 may further be communicatively connected to a keyboard 204 and a mouse 205. A user may control the electronic device 200 through the keyboard 204 and the mouse 205. A window 201, a window 202, and a window 203 are windows generated by the electronic device 200 based on display data of the electronic device 100. When a focus window is one of the window 201, the window 202, and the window 203, the electronic device 200 may define a function of an ESC key 2041 in the keyboard 204 as "back to previous level". To be specific, when the ESC key 2041 on the electronic device 200 is triggered, the electronic device 200 displays a previous-level user interface a2 of a user interface a1, where the user interface a1 is a user interface displayed on the focus window before the ESC key 2041 is triggered.

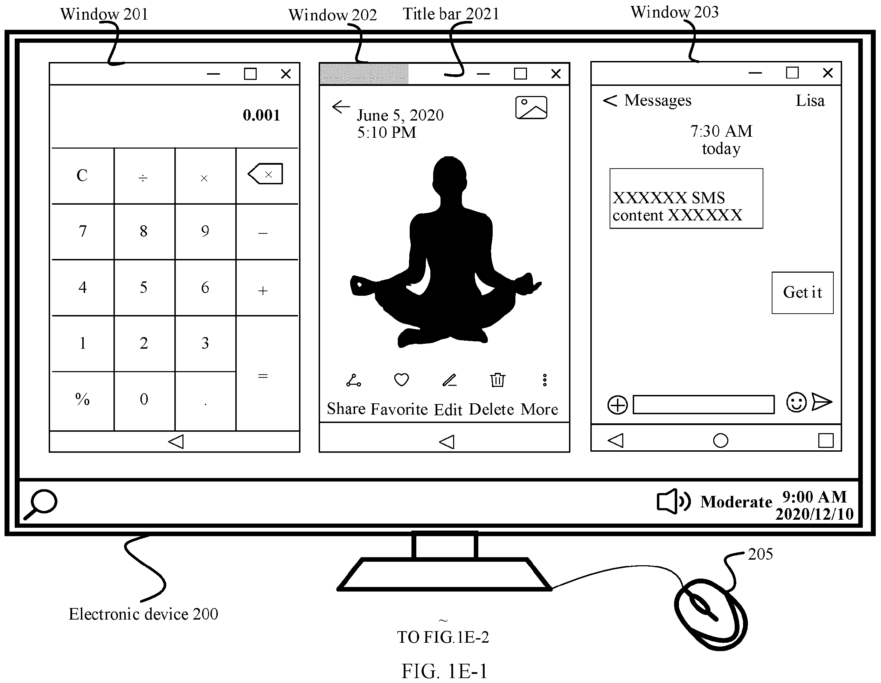

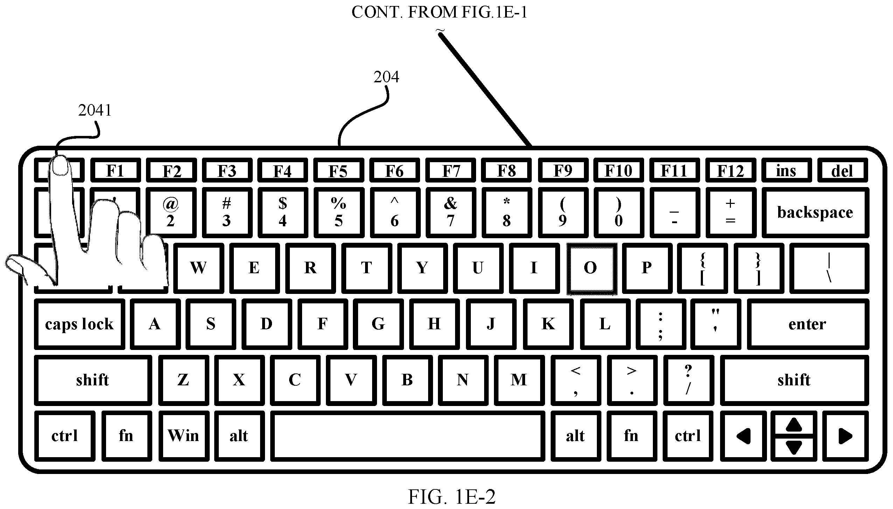

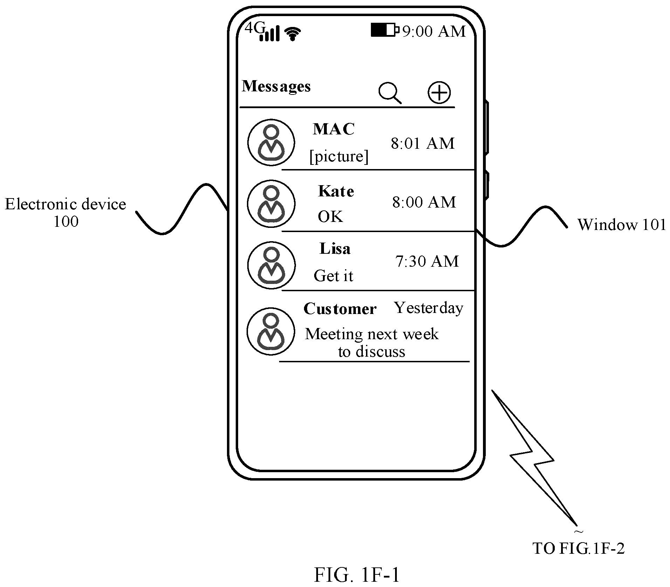

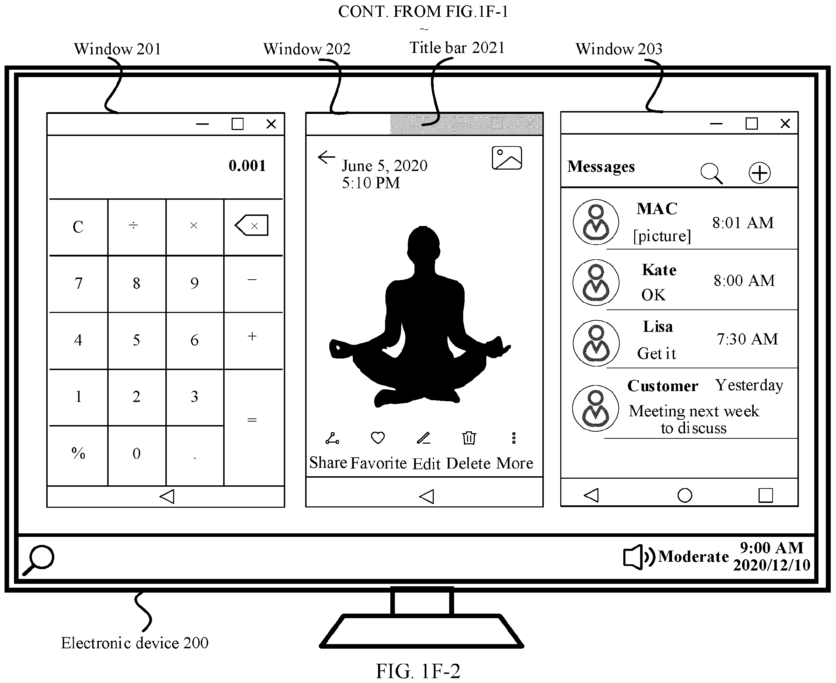

After the user completes the touch operation shown in FIG. 1B-1 and FIG. 1B-2, a case shown in FIG. 1C-1 and FIG. 1C-2 is obtained. If the electronic device used by the user is switched from the electronic device 100 to the electronic device 200 in this case, because the title bar 2021 of the current window 202 is in a highlighted state, the current window 202 is a focus window of the electronic device 200. An operation (for example, inputting information, deleting information, or back to a previous level of a user interface of a window) that is input from the keyboard 204 and that is performed on a single window of the electronic device 200 may be considered as an operation on the focus window by the user. A current user interface of the Gallery application is shown by a window 202 in FIG. 1C-2. If a user wants to return the user interface of the Gallery application to a previous level, as shown in FIG. 1E-1 and FIG. 1E-2, the user may directly press an ESC key 2041 in the keyboard 204. After the user presses the ESC key 2041, referring to FIG. 1F-1 and FIG. 1F-2, the electronic device returns the user interfaces of the Messages application displayed on the window 101 and the window 203 to the previous level, that is, the window 101 and the window 203 display the user interfaces of the Messages application. However, the user interface of the Gallery application is not returned to the previous level.

It can be learned that in the foregoing process, when the focus application of the electronic device 100 and the focus window of the electronic device 200 do not belong to a same application, the electronic device 100 may perform a data processing operation on an incorrect application, affecting user experience.

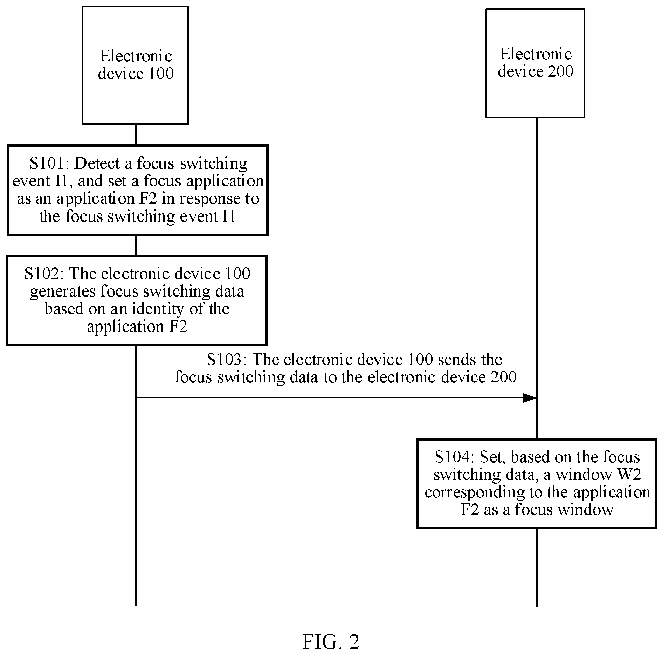

A focus synchronization method provided in embodiments of this application is described below in the following embodiment. The method is applied to a communication system. The communication system includes an electronic device 100 (which may also be referred to as a first electronic device in embodiments of this application) and an electronic device 200 (which may also be referred to as a second electronic device in embodiments of this application). The electronic device 100 is communicatively connected to the electronic device 200. When the electronic device 100 is communicatively connected to the electronic device 200, the electronic device 100 sends display data to the electronic device 200, and the electronic device 200 displays a plurality of windows based on the display data. Each of the plurality of windows displays a user interface of an application. The application is installed and runs on the electronic device 100. A window 203 (which may also be referred to as a first window in embodiments of this application) of the plurality of windows displays a first user interface of a first application. A second user interface of the first application is displayed on the electronic device 100. The first user interface and the second user interface have a same user interface element. As shown in FIG. 2, the method may include the following steps.

S101: The electronic device 100 detects a focus switching event I1 (which may also be referred to as a first focus switching event in embodiments of this application), and sets an application F2 (which may also be referred to as a third application in embodiments of this application) as a focus application in response to the focus switching event I1.

Before the electronic device 100 detects the focus switching event I1, the focus application of the electronic device is an application F1 (which may also be referred to as a second application in embodiments of this application).

The focus switching event I1 is an operation of starting/switching to the application F2. The electronic device 100 may set an application that is last started/switched to as the focus application. In this example, because the latest focus switching event I1 is for starting/switching to the application F2, the electronic device 100 switches the focus application from the application F1 to the application F2. A representation form of the focus switching event I1 may be a touch operation, a voice instruction, or an input via a peripheral device (for example, an operation performed through a keyboard and a mouse).

S102: The electronic device 100 generates focus switching data based on an identity of the application F2.

Specifically, in an Android operating system, the identity may be a task identifier (Task ID).

Optionally, before step S102 is performed, the method may further include:
S1021: Determine whether the data of the application F2 meets legality, and perform step S102 if the data of the application meets legality.

A condition for determining whether the legality is met may be preset. Specifically, the condition for determining legality may be set based on a specific scenario to which this embodiment of this application is applied. For example, the electronic device 100 may preset a data type and a data format. When the data type and the data format of the application F2 are the preset data type and data format, it is determined that the data of the application F2 meets legality; otherwise, it is determined that the data of the application F2 does not meet legality.

When the data of the application does not meet legality, a subsequent step is skipped.

A system running on the electronic device 100 may be an Android (Android^{™}) operating system. The Android operating system includes an application framework layer and an application layer. The electronic device 100 may invoke the application framework layer and the application layer to generate the focus switching data.

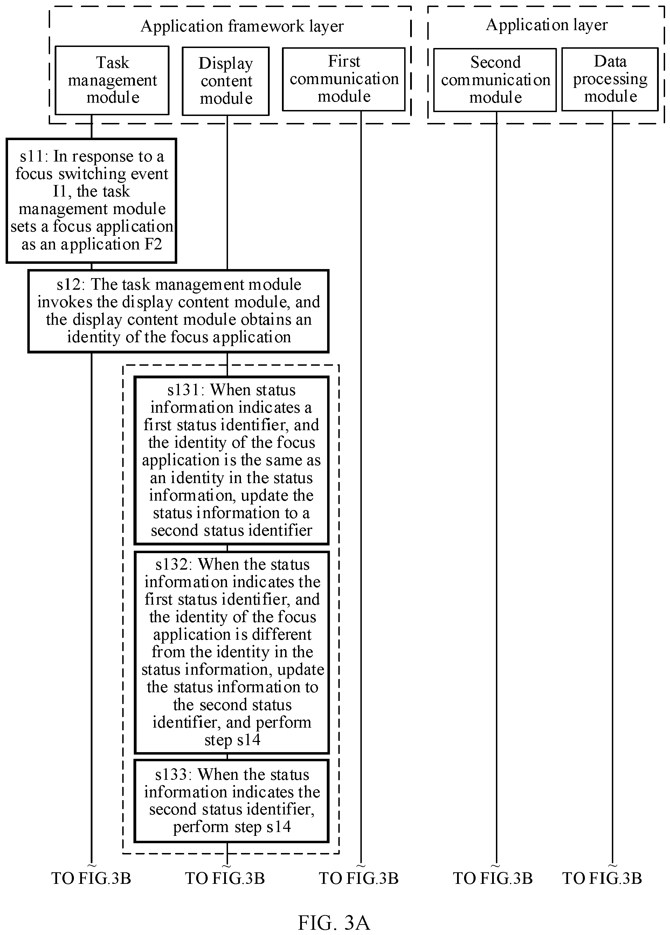

The application framework layer in the electronic device 100 may perform a focus application switching operation. The application framework layer may monitor the focus application switching operation, and perform operations in steps s11 to s14 after the focus application switching operation is monitored. As shown in FIG. 3A, the application framework layer includes a task management module, a display content module, and a first communication module. The application layer includes a second communication module and a data processing module. The first electronic device stores a reference status identifier and a reference identity. The reference identity may be set based on an identity of an application. As shown in FIG. 3A, step S101, step S1021, and step S102 may specifically include steps s11 to s13.

s11: In response to the focus switching event I1, the task management module sets the application F2 as the focus application.

s12: The task management module invokes the display content module, and the display content module obtains an identity of the focus application.

s131: When the reference status identifier indicates a first status identifier, and the identity of the focus application is the same as the reference identity, the display content module updates the reference status identifier to a second status identifier, where the reference identity is an identity included in focus switching data that is last sent by the second electronic device to the first electronic device, that is, the identity that is of the focus application and that is last set by the first electronic device based on the focus switching data sent by the second electronic device is the same as the reference identity.

The display content module may read and write status information. When the reference status identifier indicates the first status identifier, it indicates that the current focus application is set based on data transmitted by the electronic device 200. When the reference status identifier indicates the second status identifier, it indicates that the current focus application is set by the electronic device 100 based on an operation that is detected by the electronic device 100 and that is for starting/switching an application.

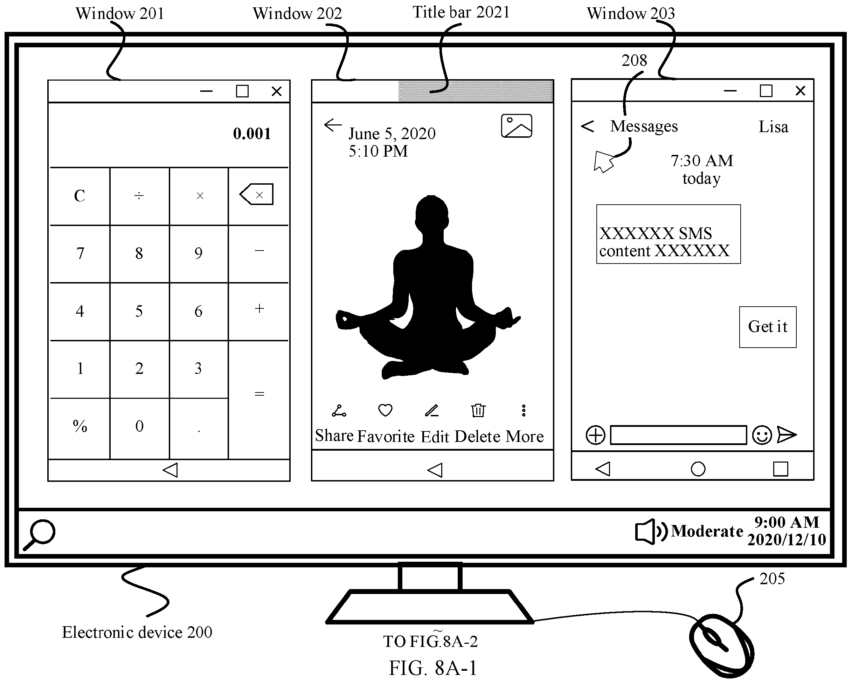

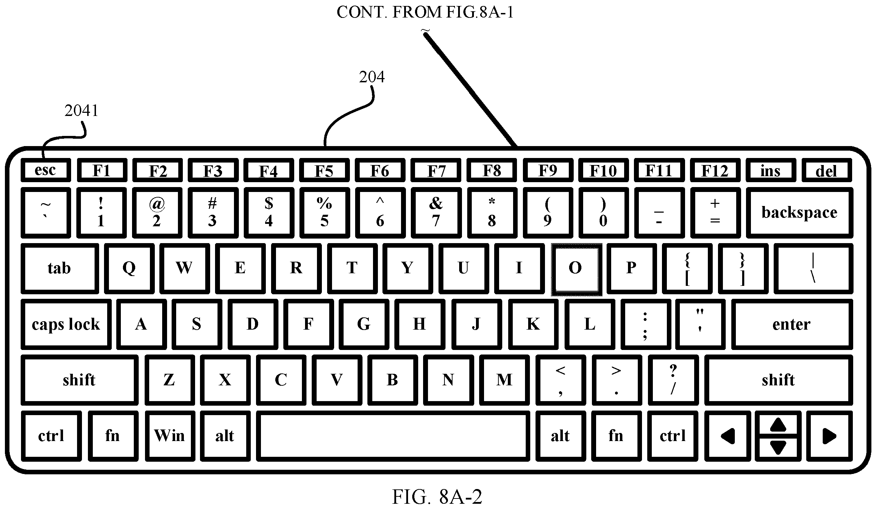

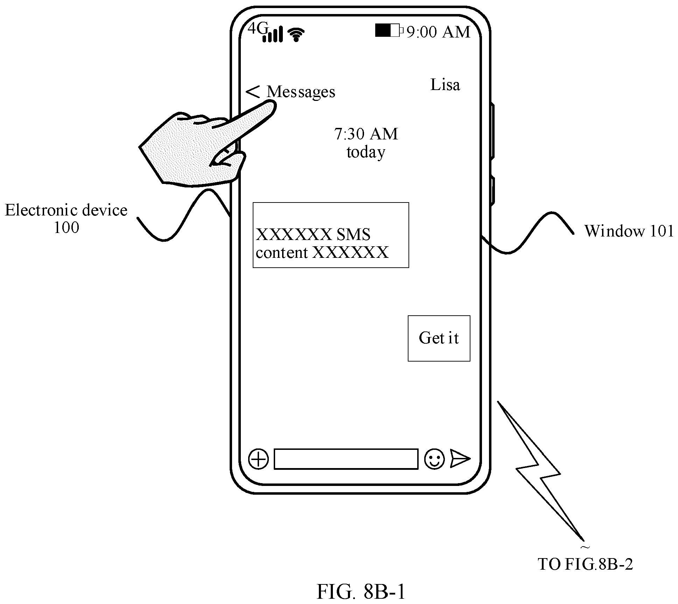

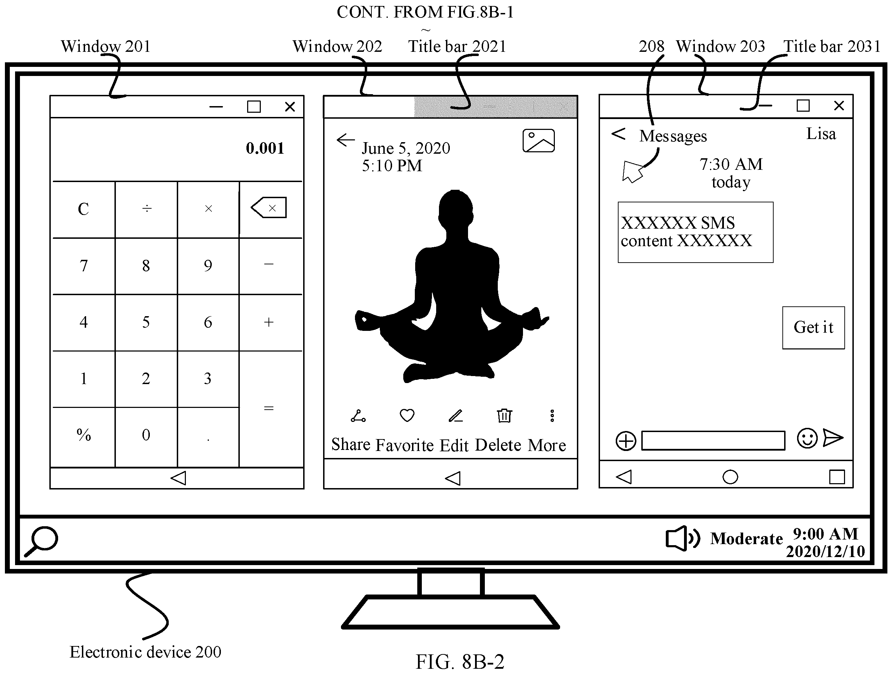

For example, as shown in FIG. 8A-1, the electronic device 100 detects that a user controls, via a mouse 205, a click operation of a cursor 208 on a window 203. Next, as shown in FIG. 8B-2, the electronic device 200 sets the window 203 as a focus window. In this case, both the window 203 and a window 101 display a user interface of a Messages application. The focus application set by the electronic device 100 is the Messages application. Because the electronic device 100 sets the Messages application as a focus application based on focus switching data sent by the electronic device 200 (that is, based on that the electronic device 200 detects the click operation of the cursor 208 on the window 203), the electronic device 100 sets the reference status identifier as the first status identifier. In addition, the electronic device updates the reference identity to an identity of the Messages application.

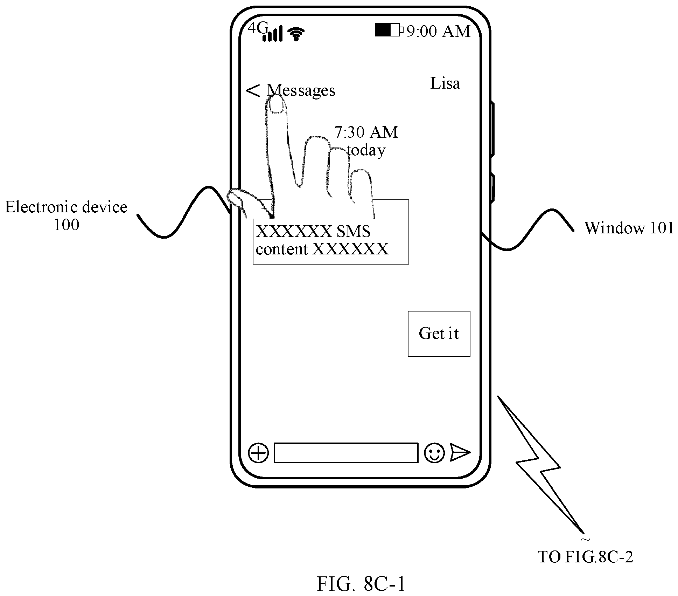

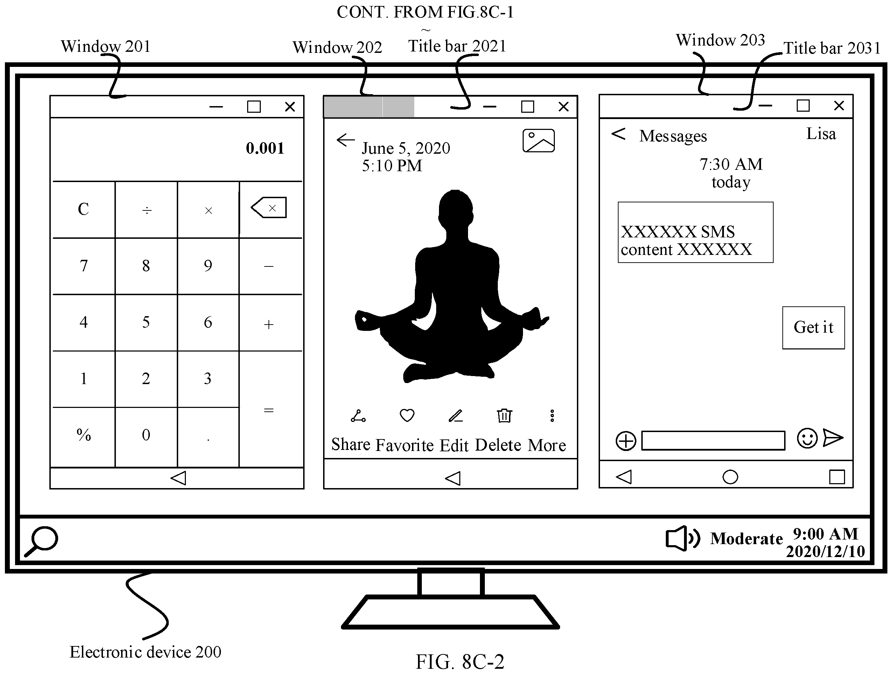

Next, referring to FIG. 8C-1, the electronic device 100 detects a touch operation (equivalent to the focus switching event I1 in step S101) on the user interface of the Messages application. In this case, because the reference status identifier is the first status identifier and the reference identity is the identity of the Messages application, the electronic device 100 updates the reference status identifier to the second status identifier. It can be learned that the focus switching event I1 is an operation on the Messages application, and the window 203 corresponding to the Messages application has been the focus window. In this case, the electronic device 100 does not perform s14 and a subsequent step, that is, the electronic device 100 does not send the focus switching data to the electronic device 200, so that repeated setting a focus between the electronic device 100 and the electronic device 200 is avoided, thereby avoiding resource waste.

s132: When the reference status identifier indicates the first status identifier, and the identity of the focus application is different from the reference identity, the display content module updates the reference status identifier to the second status identifier, and performs step s14.

For example, referring to FIG. 1C-2, a focus window set by the electronic device 200 is a window 202, and the window 202 displays a user interface of a Gallery application. Therefore, a focus application set by the electronic device 100 is the Gallery application. In addition, a window 101 and a window 203 in FIG. 1C-1 and FIG. 1C-2 display user interfaces of a Messages application. In this case, the reference status identifier is the first status identifier, and the reference identity is an identity of the Gallery application.

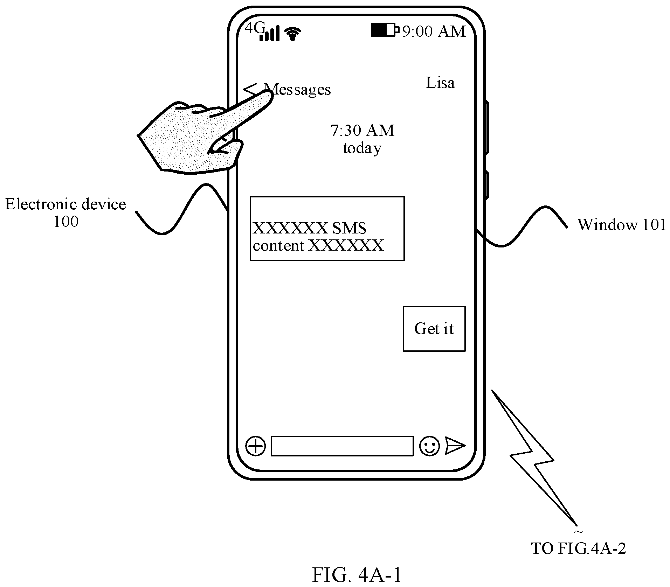

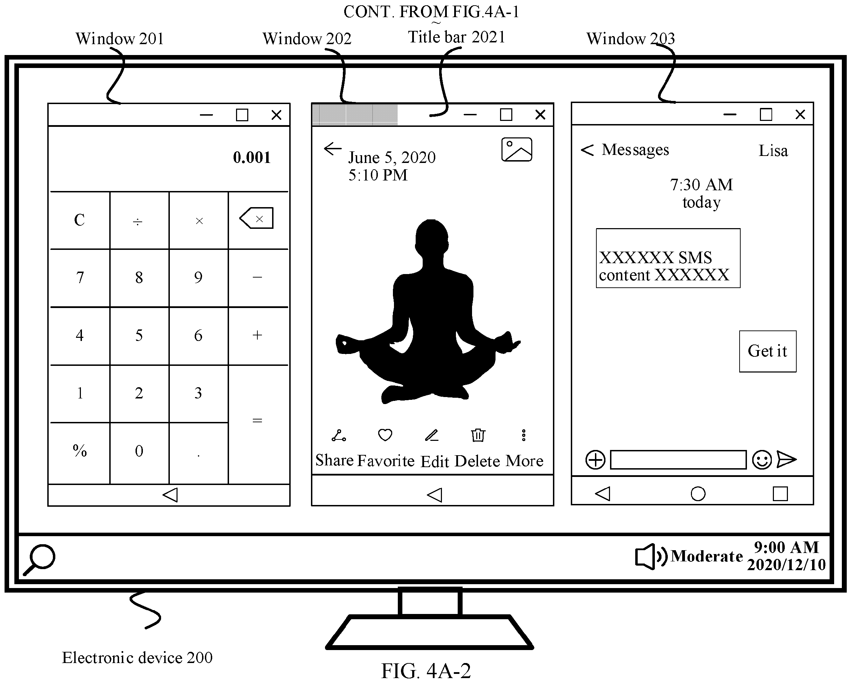

Referring to FIG. 4A-1, the electronic device 100 detects a touch operation (equivalent to the focus switching event I1 in step S101) on a user interface of a Messages application. In this case, the reference status identifier is a first status identifier, and the reference identity is an identity of a Gallery application, which is different from the identity of the Messages application. It indicates that the latest focus application is set based on focus switching data sent by the electronic device 200, and the Gallery application is different from the Messages application. Therefore, step s14 and a subsequent step are performed, so that the electronic device 200 updates the focus window to a window 203 corresponding to the Messages application.

s133: When the reference status identifier indicates the second status identifier, perform step s14.

When the reference status identifier is the second status identifier, it indicates that the focus application of the electronic device 100 is set based on an operation that is detected by the electronic device 100 and that is for starting/switching an application, and the focus window of the electronic device 200 is also set based on the focus switching data sent by the electronic device 100. Therefore, when the focus application of the electronic device 100 is switched, s14 and the subsequent step are performed, so that the electronic device 200 updates the focus window to a window corresponding to the current focus application of the electronic device 100.

It can be learned that in steps s31 to s133, when the focus window and the focus application are effectively synchronized, the electronic device 100 and the electronic device 200 are prevented from performing cyclic setting when the focus window and the focus application are already synchronized, thereby avoiding resource waste.

s14: The display content module invokes the first communication module, and the first communication module sends information data d1 to the second communication module, where the information data d1 includes an identity of the focus application. Optionally, the information data d1 may further include a reference status identifier.

s15: The second communication module sends the information data d1 to the data processing module, and the data processing module processes the information data d1 to obtain information data d2.

A process in which the data processing module processes the information data d1 to obtain the information data d2 may include: converting a data format of the information data d1 to obtain the information data d2, where the data format of the information data d1 is a data format that can be read and written by the electronic device 100, and the data format of the information data d2 is a data format that can be read and written by the electronic device 200.

s16: The data processing module encapsulates the information data d2 to obtain focus switching data.

S103: The electronic device 100 sends the focus switching data to the electronic device 200.

S104: The electronic device 200 sets, based on the focus switching data, a window W2 corresponding to the application F2 as a focus window.

In embodiments of this application, the window W2 may also be referred to as a third window.

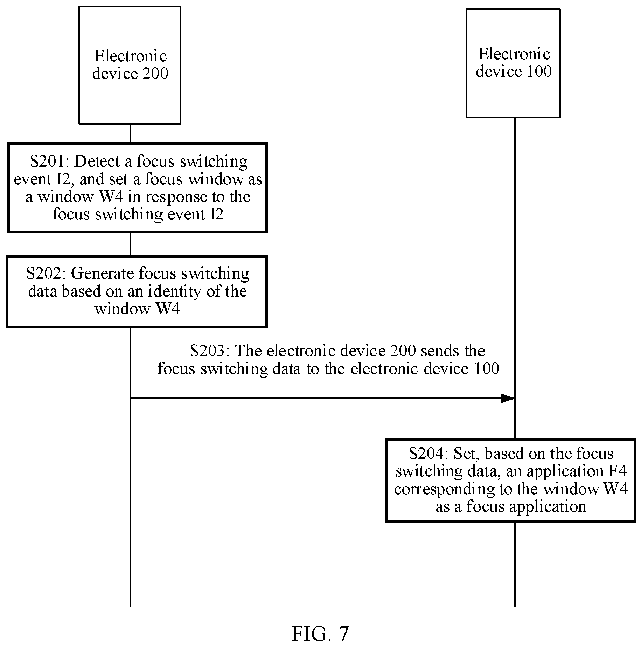

Specifically, the electronic device 200 may parse the focus switching data to obtain an identity of the application F2, determine, based on the identity of the application F2, the window W2 corresponding to the application F2, and then set the window W2 as the focus window. After the electronic device 200 sets the window W2 as the focus window, the method may further include: The electronic device 200 determines a scenario in which the window W2 is set as the focus window. In this example, when the electronic device 200 determines that the electronic device 200 sets the window W2 as the focus window based on the focus switching data sent by the electronic device 100, the electronic device 200 does not perform a subsequent operation. Another case in which the electronic device 200 determines the scenario in which the window W2 is set as the focus window is: When the electronic device 200 sets the focus window W2 based on an operation detected by the electronic device 200 (in this case, setting the window W2 as the focus window is equivalent to step S201), steps S202 to S204 in an embodiment shown in FIG. 7 are performed.

In some embodiments, that the electronic device 200 sets the window W2 as the focus window may further include: The electronic device 200 marks the focus window, so that a user can determine, through a mark of the window W2, that the window W2 is the focus window. Specifically, the marking the focus window may include: (1) setting a title bar of the focus window to a highlighted state; and (2) adjusting a transparency of the focus window.

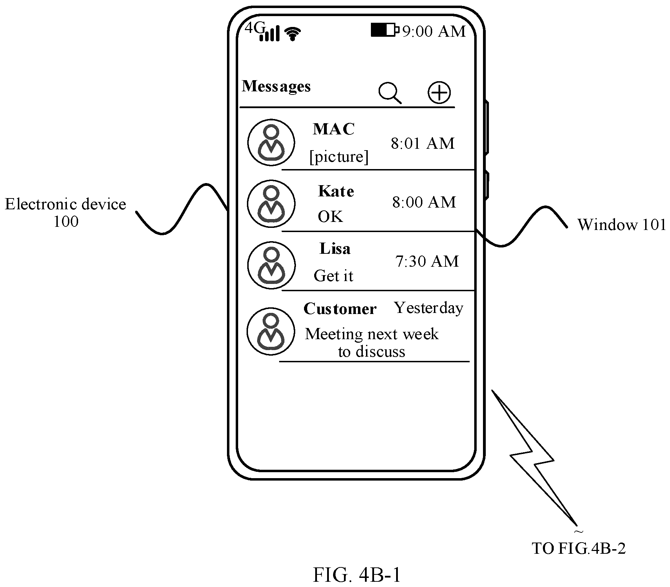

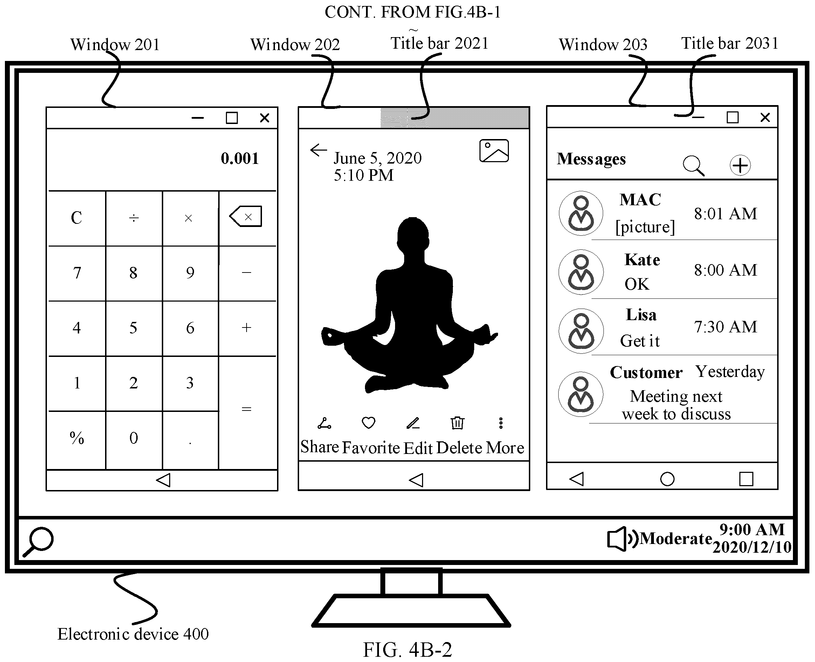

For example, refer to FIG. 1C-1 and FIG. 1C-2. FIG. 1C-1 and FIG. 1C-2 show states of the electronic device 100 and the electronic device 200 that are obtained before step S101 is performed. A title bar 2021 of a window 202 is in a highlighted state, indicating that a focus window set by the electronic device 200 is the window 202 in this case, and a window 203 in the electronic device 200 is a main window. Refer to FIG. 4A-1 and FIG. 4A-2, FIG. 4A-1 and FIG. 4A-2 show that the electronic device 100 detects a touch operation. The touch operation is used to return from a chat interface with a contact "Lisa" to an interface of a message list (that is, return to a previous-level interface of a user interface in a window 101). In this example, the touch operation is a specific representation form of the focus switching event I1 in step S101. Next, the electronic device 100 and the electronic device 200 perform steps S101 to S104, and FIG. 4B-1 and FIG. 4B-2 show a specific state after the electronic device 100 and the electronic device 200 complete the steps S101 to S104. A title bar 2031 of a window 203 in FIG. 4B-2 is in a highlighted state, indicating that the focus window is the window 203 in this case. In addition, user interfaces displayed on the window 203 and a window 101 in FIG. 4B-1 and FIG. 4B-2 are previous-level interfaces of user interfaces displayed on a window 203 and a window 101 in FIG. 1C-1 and FIG. 1C-2, that is, the chat interface with the contact "Lisa" returns to the interface of the message list.

In some embodiments, that the electronic device 200 sets the window W2 as the focus window may further include: The electronic device 200 places the focus window at a topmost layer of a display interface, so that other window in the display interface cannot cover the focus window.

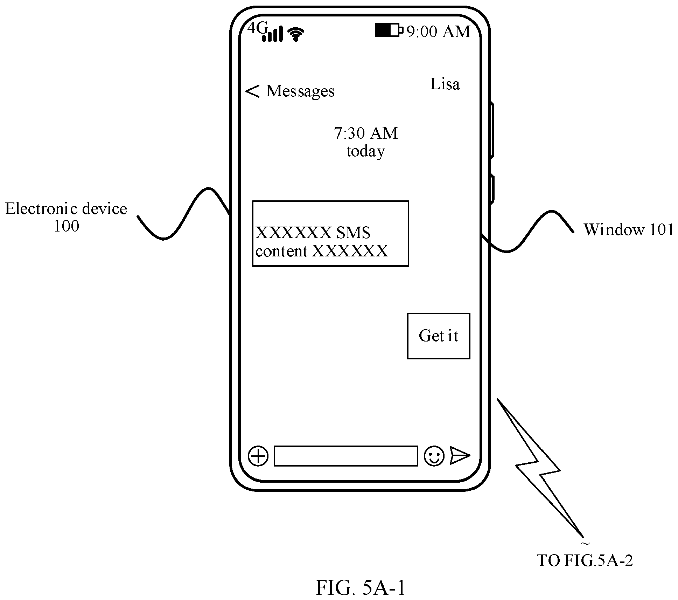

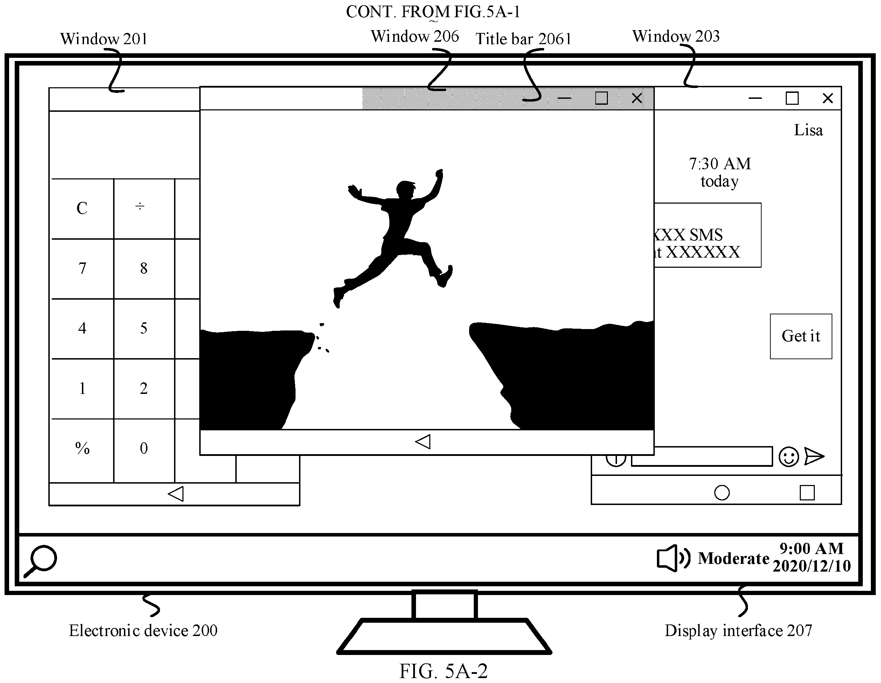

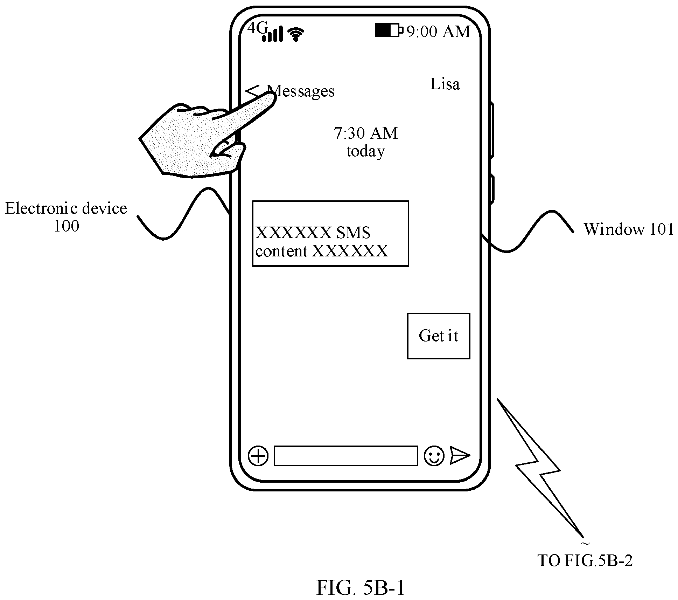

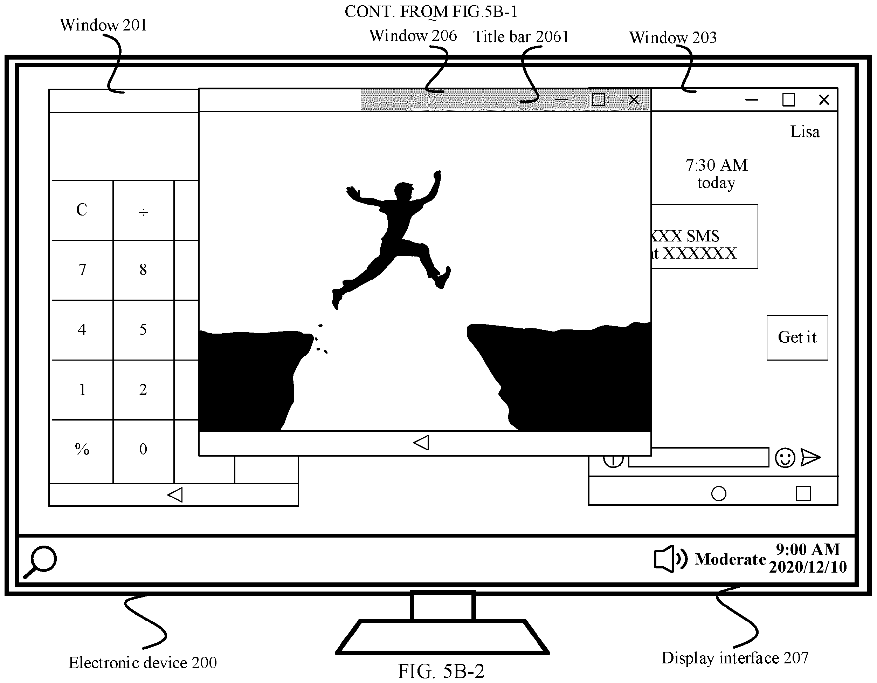

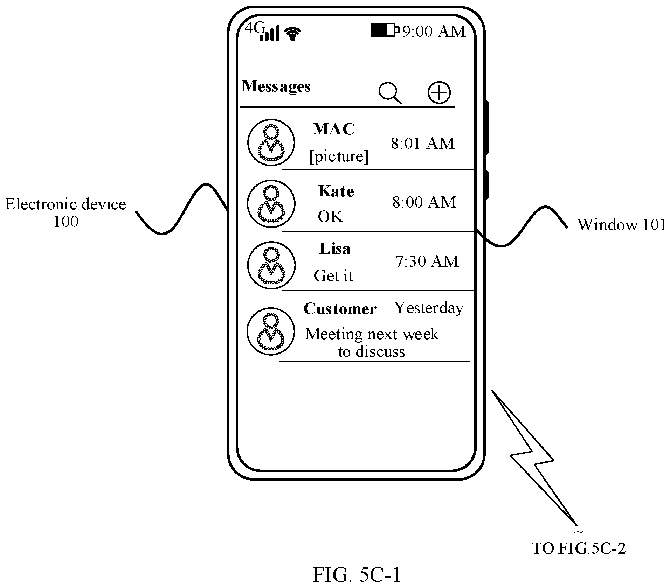

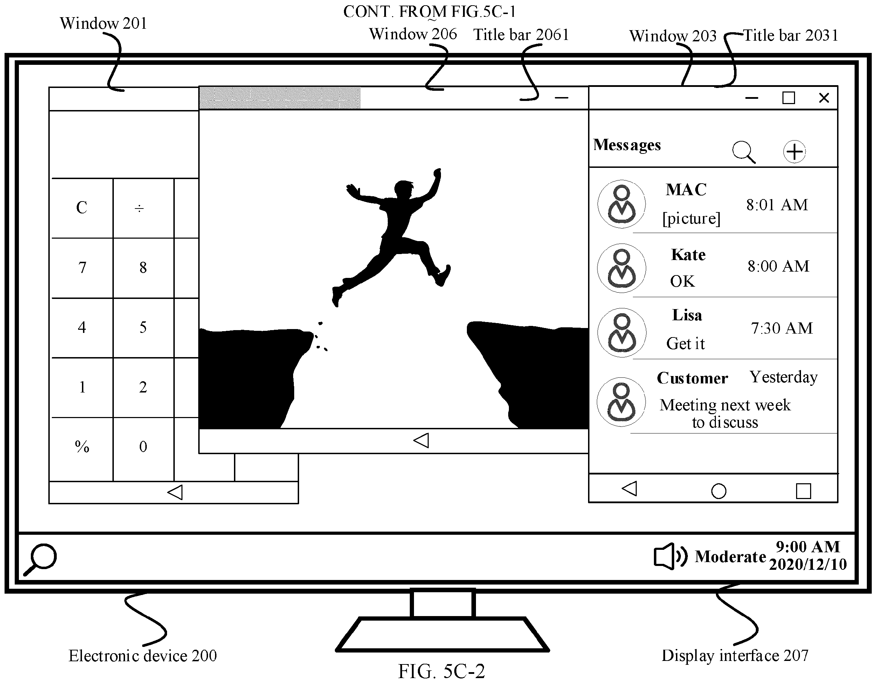

For example, refer to FIG. 5A-1 and FIG. 5A-2. FIG. 5A-1 and FIG. 5A-2 show states of the electronic device 100 and the electronic device 200 that are obtained before step S101 is performed. A title bar 2061 of a visible window 206 is in a highlighted state, indicating that a focus window set by the electronic device 200 in this case is the window 206. FIG. 5A-2 further includes a display interface 207, and the display interface 207 indicates all displayable areas of the electronic device 200. It can be learned from FIG. 5A-2 that the window 206 is located at the top layer of the display interface 207, the window 206 covers a portion of a window 201 and a portion of a window 203, and the window 203 is a main window of the electronic device 200. Refer to FIG. 5B-1 and FIG. 5B-2. FIG. 5B-1 and FIG. 5B-2 show that the electronic device 100 detects a touch operation. The touch operation is used to return from a chat interface with a contact "Lisa" to an interface of a message list (that is, return to a previous-level interface of a user interface in a window 101). In this example, the touch operation is a specific representation form of the focus switching event I1 in step S101. Next, the electronic device 100 and the electronic device 200 perform steps S101 to S104, and FIG. 5C-1 and FIG. 5C-2 show a specific state after the electronic device 100 and the electronic device 200 complete the steps S101 to S104. It can be learned that, in FIG. 5C-2, the electronic device 200 puts a window 203 to the top layer of the display interface 207, so that the electronic device 200 can fully display the window 203. In addition, the electronic device 200 sets a title bar 2031 of the window 203 to a highlighted state, indicating that the window 203 is a focus window of the electronic device 200.

It should be noted that the window 206 may be a window generated based on display data sent by the electronic device 100, or may be a window that is displayed on the electronic device 200 and that corresponds to an application installed on the electronic device 200. This is not limited herein.

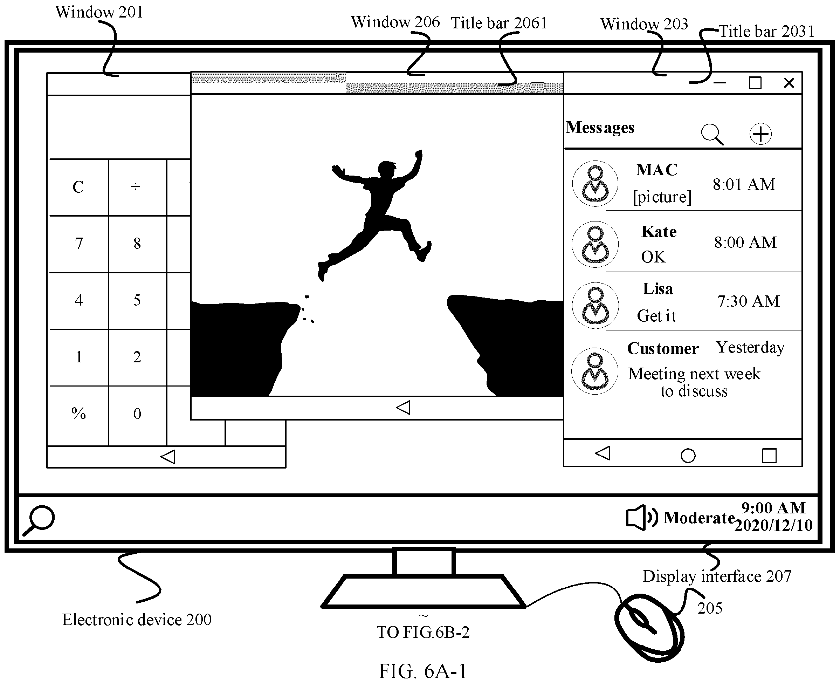

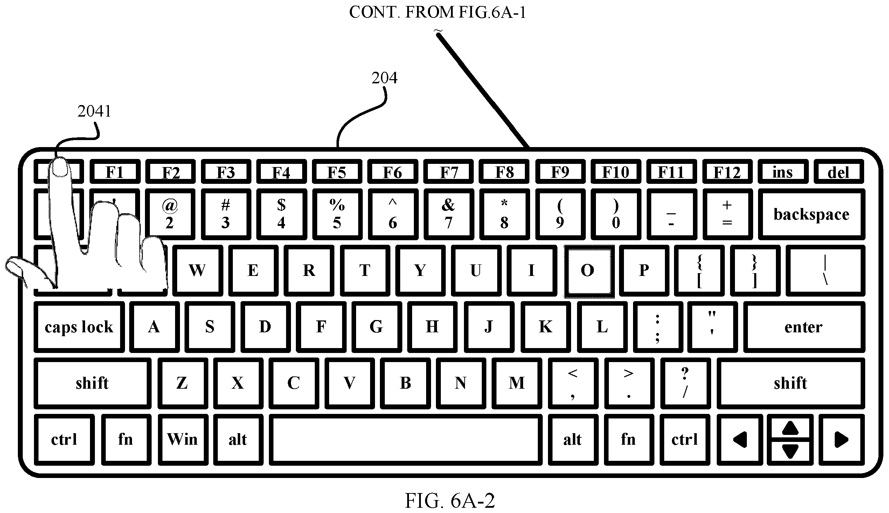

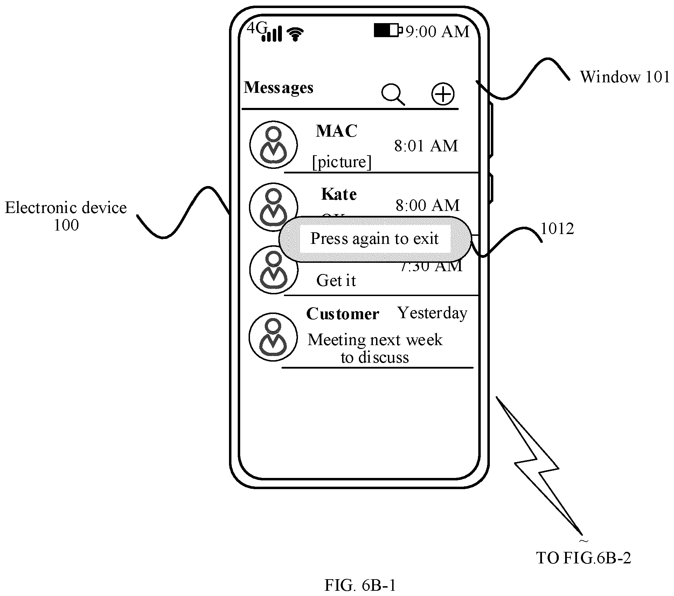

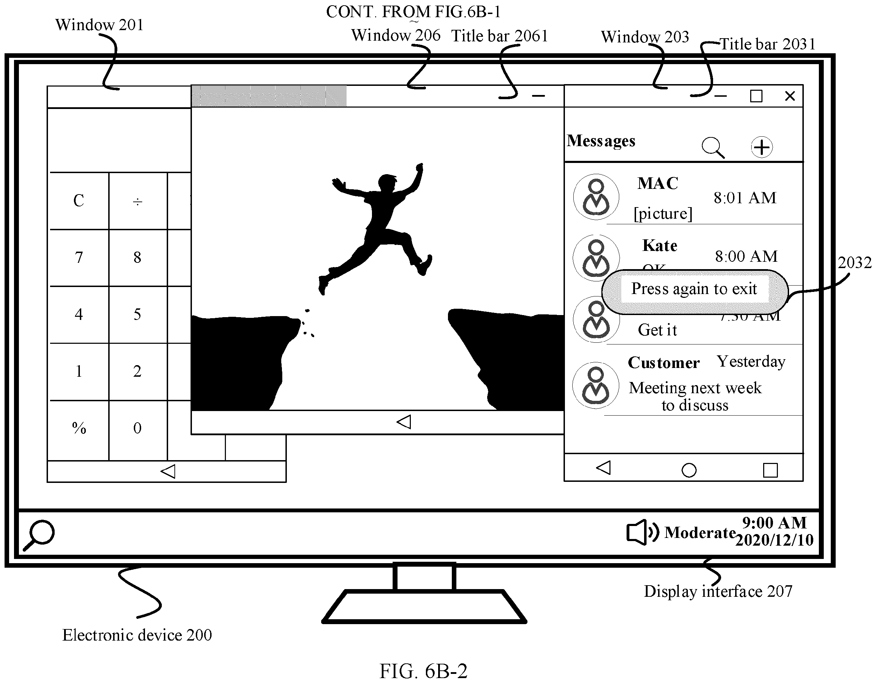

In some embodiments, as shown in FIG. 6A-1 and FIG. 6A-2, the electronic device 200 may further be communicatively connected to a keyboard 204 and a mouse 205. The keyboard 204 includes an ESC key 2041, and a function of the ESC key 2041 is "back to previous level". After step S104 is completed, states of the electronic device 100 and the electronic device 200 may be shown in FIG. 5C-1 and FIG. 5C-2. After step S104, the method may further include: as shown in FIG. 6A-1 and FIG. 6A-2, the electronic device 200 detects a pressing operation on the ESC key 2041; and then the electronic device 200 sends data generated based on the pressing operation to the electronic device 100, and the electronic device 100 processes data of a Messages application based on the received data to obtain display data, and sends the display data to the electronic device 200. The electronic device 100 and the electronic device 200 display, based on the display data, user interfaces shown in FIG. 6B-1 and FIG. 6B-2, and display an identifier of "Press again to exit" in user interfaces of a window 101 and a window 203, to prompt a user to press the ESC key again to exit the Messages application. Specifically, the identifier of "Press again to exit" is 1012 in the window 101 and 2032 in the window 203. In this example, after step S104, the window 203 and the window 101 display a message list of the Messages application. Because the message list is already a top-level user interface of the Messages application, the function of "back to previous level" cannot be further executed. Therefore, in this example, the window 101 and the window 203 display the identifier of "Press again to exit". When a user interface displayed for the focus application in the electronic device 100 is a top-level user interface, the ESC key 2041 may be pressed twice consecutively to exit the focus application.

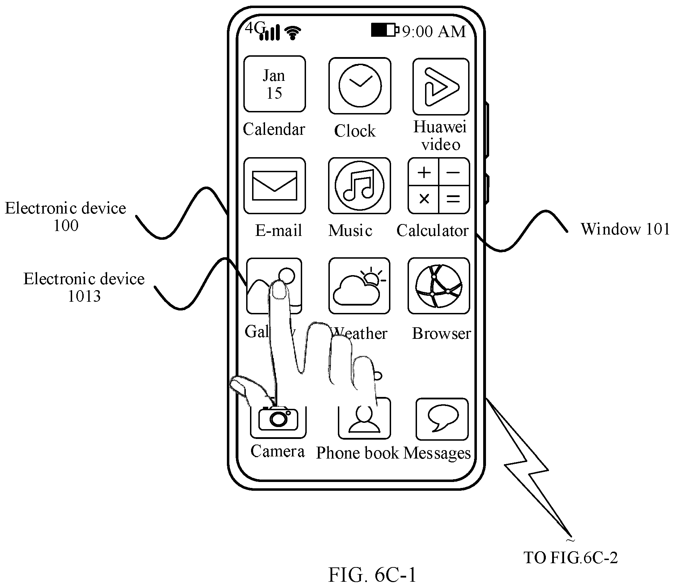

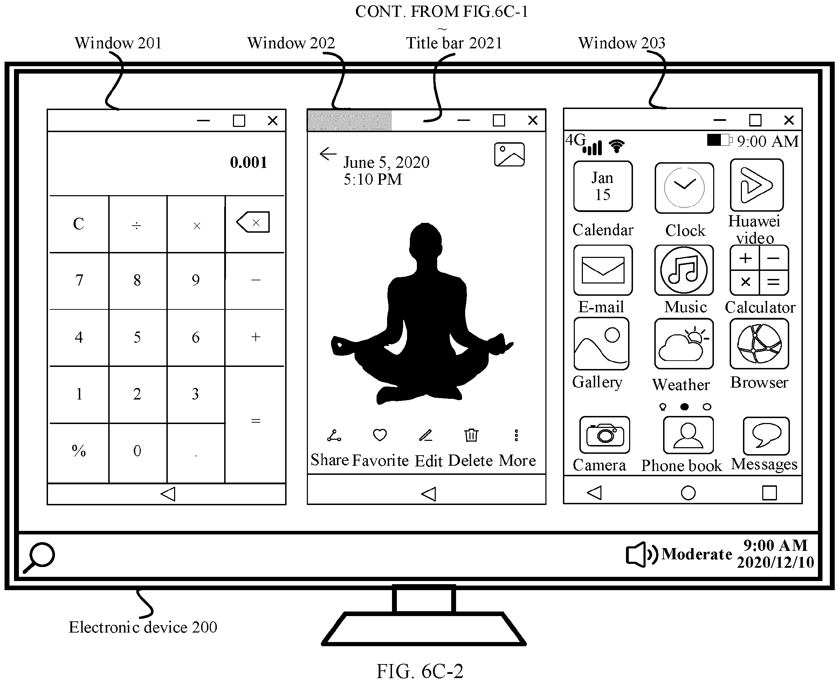

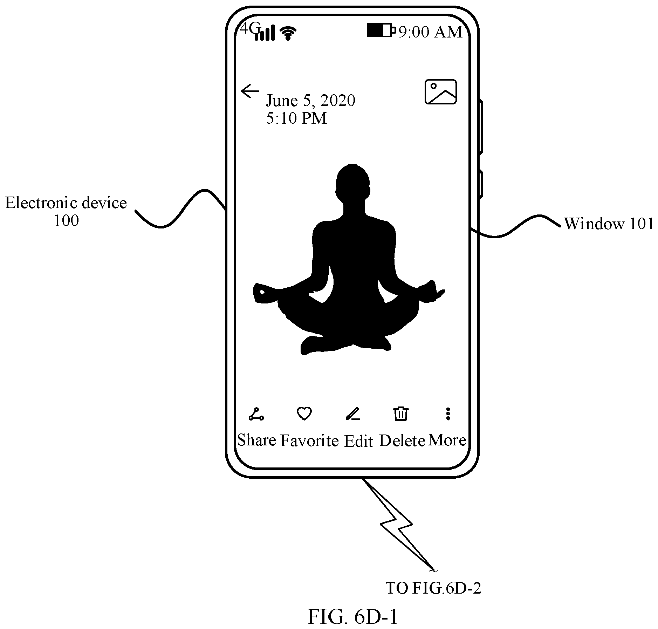

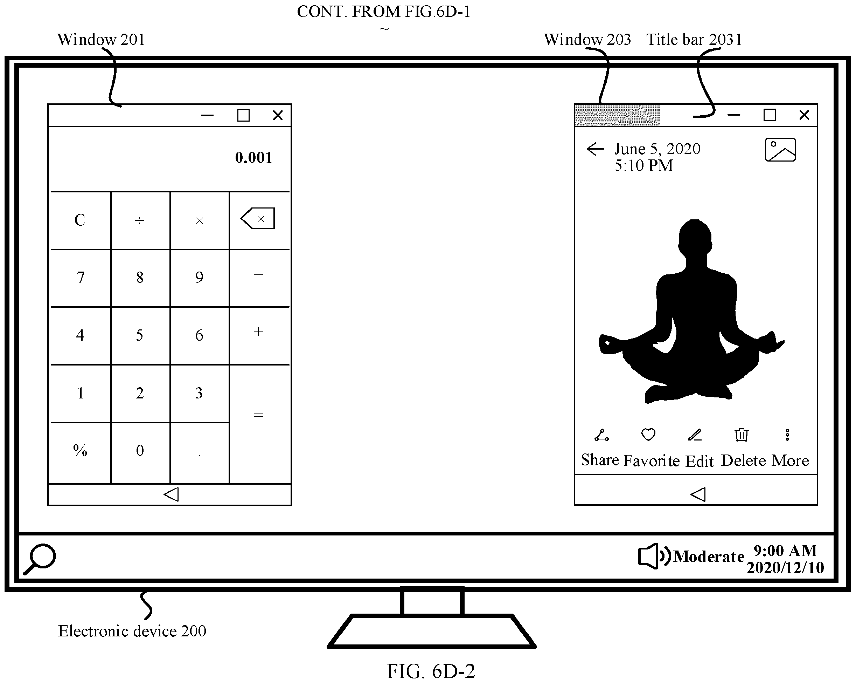

In some embodiments, the focus switching event I1 in step S101 is for opening the application F2. If a user interface of the application F2 has been displayed in a sub-window b1 of the electronic device 200 before a user executes the focus switching event I1, in step S104, the electronic device 200 displays the user interface of the application F2 in a main window, and sets the main window as a focus window. In addition, the electronic device 200 may close the sub-window b1, where a sub-window refers to any window other than a main window of the plurality of windows. The sub-window b1 is a sub-window of sub-windows opened by the electronic device 200. For example, before step S101, states of the electronic device 100 and the electronic device 200 are shown in FIG. 1A-1 and FIG. 1A-2. It can be seen that a window 203 is a main window of the electronic device 200, and a user interface displayed on a window 202 of the electronic device 200 is a user interface of a Gallery application. Referring to FIG. 6C-1 and FIG. 6C-2, the first operation in step S101 is a touch operation on an icon 1013 of the Gallery application in a window 101, that is, the focus switching event I1 is for opening the Gallery application. Because the user interface of the Gallery application is already displayed on the window 202, as shown in FIG. 6D-1 and FIG. 6D-2, the electronic device 100 displays the user interface of the Gallery application on the window 101, and the electronic device 200 displays the user interface of the Gallery application in the window 203 and sets the window 203 as a focus window. In addition, the electronic device 200 closes the window 202.

Another focus synchronization method provided in embodiments of this application is described below in the following embodiment. The method is applied to a communication system. The communication system includes an electronic device 100 and an electronic device 200. The electronic device 100 is communicatively connected to the electronic device 200. When the electronic device 100 is communicatively connected to the electronic device 200, the electronic device 100 sends display data to the electronic device 200, and the electronic device 200 displays a plurality of windows based on the display data. As shown in FIG. 7, the method may include the following steps.

S201: The electronic device 200 detects a focus switching event I2 (which may also be referred to as a first focus switching event in embodiments of this application), and sets a window W4 (which may also be referred to as a third window in embodiments of this application) as a focus window in response to the focus switching event I2.

That the electronic device 200 sets a window W4 as a focus window may include: The electronic device 200 marks the focus window, so that a user can determine, through a mark of the window W4, that the window W4 is the focus window. Specifically, the marking the focus window may include: (1) setting a title bar of the focus window to a highlighted state; and (2) adjusting a transparency of the focus window.

That the electronic device 200 sets a window W4 as a focus window may further include: The electronic device 200 places the focus window at a topmost layer of a display interface, so that other windows in the display interface are kept from covering the focus window.

Before the electronic device 200 detects the focus switching event I2, the focus window set by the electronic device 200 is a window W3 (which may also be referred to as a second window in embodiments of this application).

The focus switching event I2 is an operation for opening/switching to a window W4 corresponding to an application F4 (which may also be referred to as a third application in embodiments of this application). The electronic device 200 may set a window that is last opened/switched to as the focus window. In this example, because the latest focus switching event I2 is opening/switching to the window W4, the electronic device 200 switches the focus window from the window W3 to the window W4. A representation form of the focus switching event I2 may be a touch operation, a voice instruction, or an input via a peripheral device (for example, an operation performed through a keyboard and a mouse).

For example, before step S201 is performed, states of the electronic device 100 and the electronic device 200 may be shown in FIG. 1C-1 and FIG. 1C-2. Next, as shown in FIG. 8A-1, the electronic device 200 detects a click operation of a cursor 208 on a window 203 that is controlled through a mouse 205. Next, as shown in FIG. 8B-2, the electronic device 200 sets the window 203 as the focus window.

S202: The electronic device 200 generates focus switching data based on an identity of the window W4.

Specifically, after the electronic device 200 detects the operation for opening/switching to the window W4 corresponding to the application F4, the electronic device 200 first determines the identity of the window W4, and then the electronic device 200 generates the focus switching data based on the identity of the window W4.

S203: The electronic device 200 sends the focus switching data to the electronic device 100.

S204: The electronic device 100 sets, based on the focus switching data, the application F4 corresponding to the window W4 as a focus application.

A system running on the electronic device 100 may be an Android (Android^{™}) operating system. The Android operating system includes an application framework layer and an application layer. Specifically, after the electronic device 100 receives the focus switching data, the application layer first processes the focus switching data to obtain processed focus switching data. It should be noted that a data format of the focus switching data before the processing is a data format that can be read and written by the electronic device 200, and a data format of the processed focus switching data is a data format that can be read and written by the electronic device 100. Next, the application layer transmits the processed focus switching data to the application framework layer. The application framework layer sets, based on the processed focus switching data, the application F4 corresponding to the window W4 as the focus application.

After step S204 is performed, the method further includes: The electronic device 100 updates status information to a first status identifier. In addition, an identity in the status information is updated to an identity of the application F4. It should be noted that, for explanations of the status information with different status identifiers, refer to step s131. Details are not described herein again.

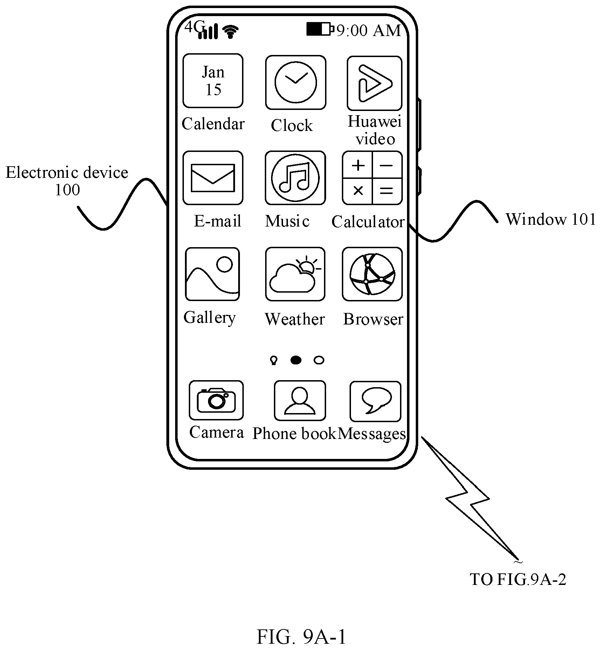

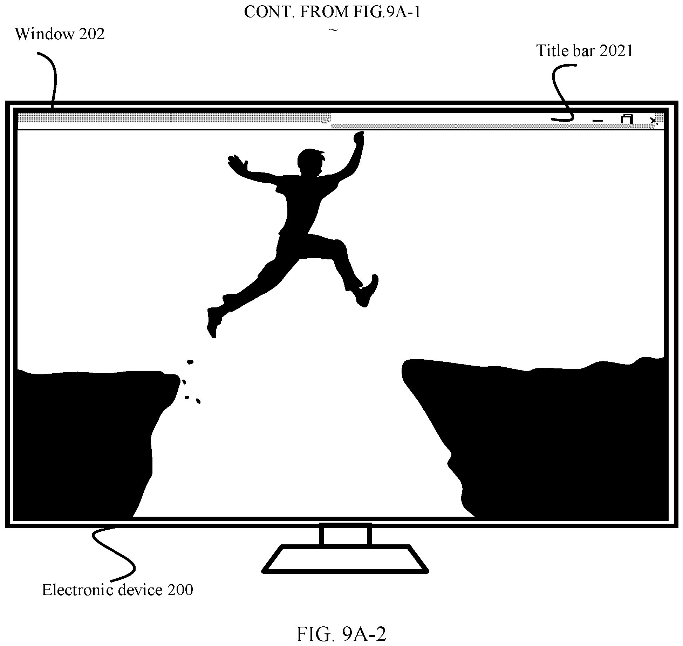

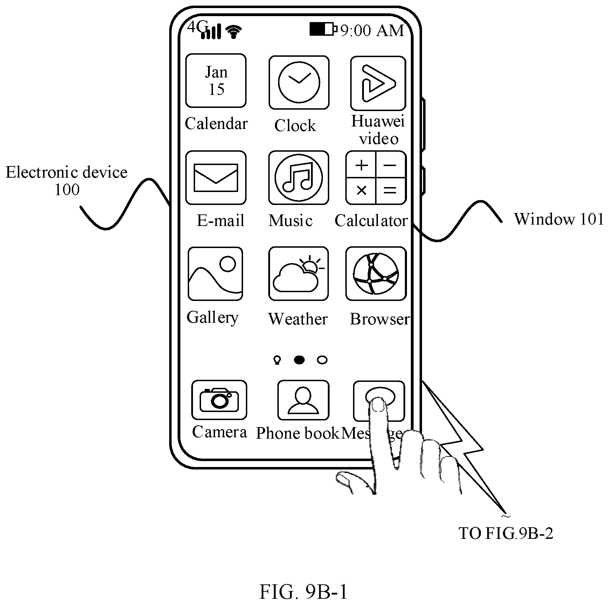

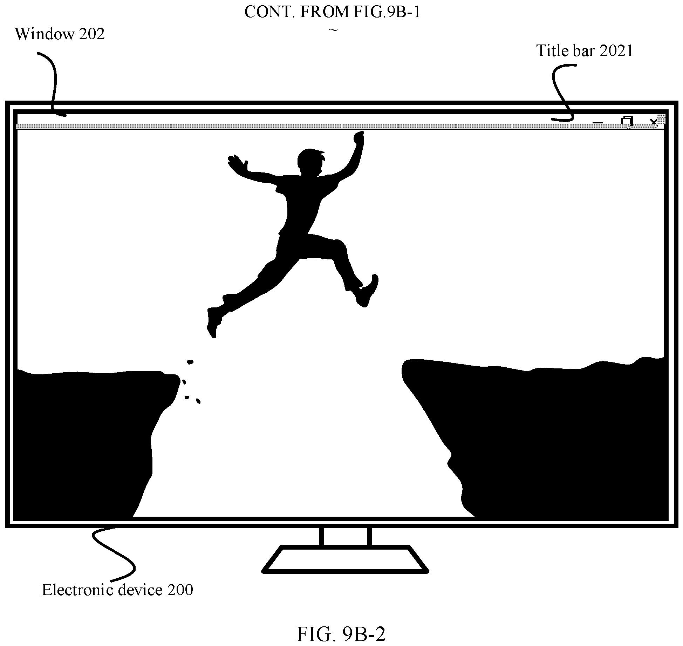

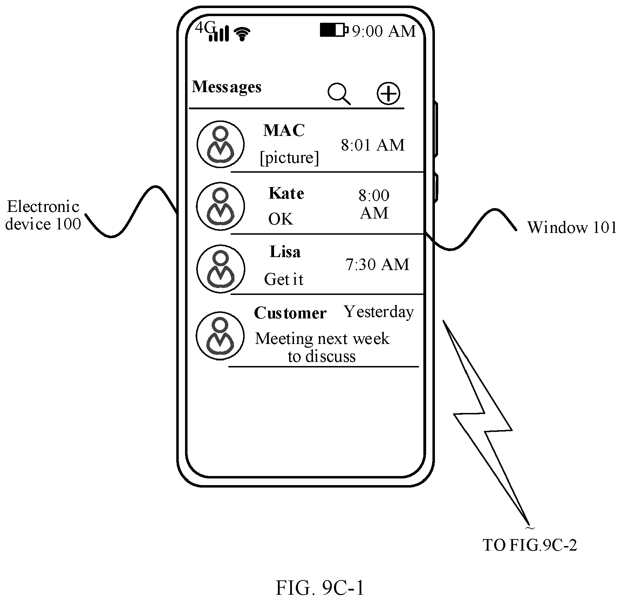

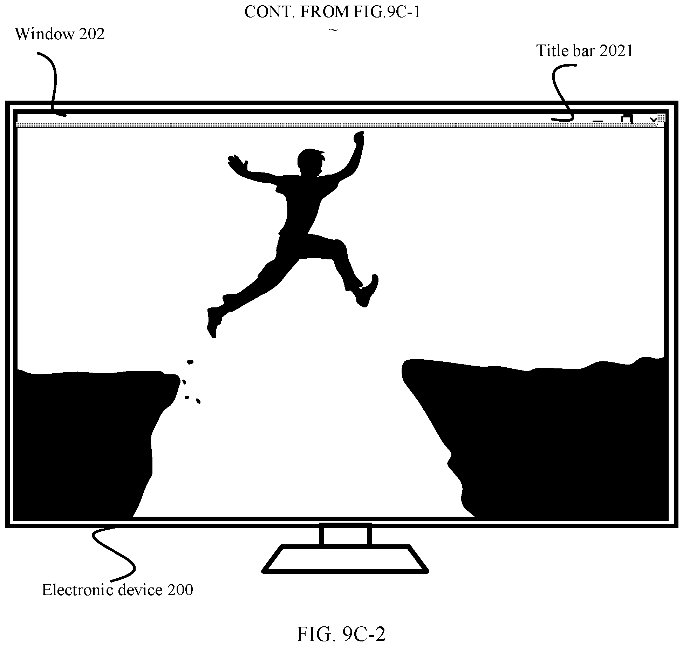

In some embodiments, after step S103 is performed, the electronic device 200 skips performing step S104. Specifically, when detecting that a sub-window is in a preset state, the electronic device 200 skips performing step S104. The preset state may be that a sub-window is a full-screen window and/or a sub-window is in a video playback state. When the electronic device 200 opens a plurality of windows based on display data of the electronic device 100, a sub-window represents a window other than a main window of the plurality of windows. For example, refer to FIG. 9A-1 and FIG. 9A-2. FIG. 9A-1 and FIG. 9A-2 are a schematic state diagram of states of the electronic device 100 and the electronic device 200 that are obtained before step S101 is performed. It can be learned that a title bar 2021 of a window 202 in the electronic device 200 is in a highlighted state, indicating that the window 202 is a focus window. The window 202 is a full-screen window, and the window 202 is in a video playback state. Next, as shown in FIG. 9B-1, the electronic device 100 detects a touch operation performed by a user on an icon of a Messages application in a window 101; and then the electronic device 100 and the electronic device 200 perform steps S101 to S103; and then the electronic device 200 detects that the window 202 is in a full-screen state, and the window 202 is in a video playback state, that is, a sub-window is in a preset state. Therefore, step S104 is not performed. Therefore, after step S103 is performed, states of the electronic device 100 and the electronic device 200 are shown in FIG. 9C-1 and FIG. 9C-2.

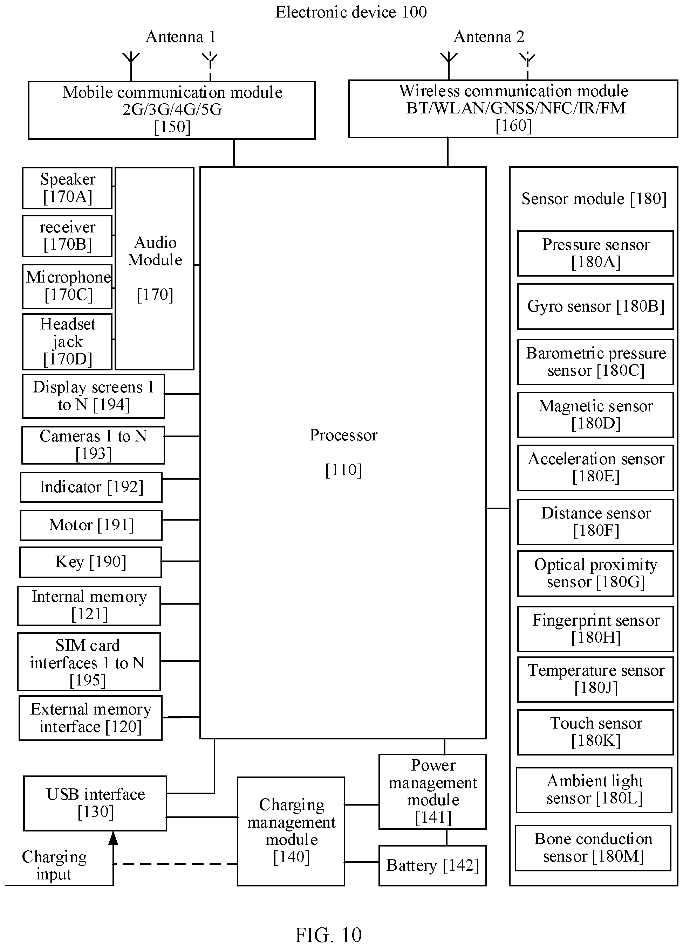

FIG. 10 is a schematic structural diagram of an electronic device 100. It should be noted that in embodiments of this application, the electronic device 200 may have a same structure as the electronic device 100.

The electronic device 100 may be a mobile phone, a tablet computer, a desktop computer, a laptop computer, a handheld computer, a notebook computer, an ultra-mobile personal computer (ultra-mobile personal computer, UMPC), a netbook, a cellular phone, a personal digital assistant (personal digital assistant, PDA), an augmented reality (augmented reality, AR) device, a virtual reality (virtual reality, VR) device, an artificial intelligence (artificial intelligence,AI) device, a wearable device, a vehicle-mounted device, a smart home device, and/or a smart city device, and a specific type of the electronic device is not limited in the embodiment of this application.

The electronic device 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a key 190, a motor 191, an indicator 192, a camera 193, a display screen 194, subscriber identity module (subscriber identity module, SIM) card interfaces 195, etc. The sensor module 180 may include a pressure sensor 180A, a gyro sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, etc.

It may be understood that the structure shown in this embodiment of this application does not constitute a specific limitation on the electronic device 100. In some other embodiments of this application, the electronic device 100 may include more or fewer components than those shown in the figure, or some components may be combined, or some components may be divided, or different component arrangements may be used. The illustrated components may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, and/or a neural-network processing unit (neural-network processing unit, NPU), etc. Different processing units may be separate components, or may be integrated into one or more processors.

The controller may generate an operation control signal based on an instruction operation code and a timing signal, and implement control on instruction fetching and instruction execution.

A memory configured to store instructions and data may be further disposed in the processor 110. In some embodiments, the memory in the processor 110 is a cache. The memory may store an instruction or data that is recently used or to be cyclically used by the processor 110. When needing to use the instruction or the data again, the processor 110 may directly call the instruction or the data from the memory. This avoids repeated accessing and reduces a wait time for the processor 110, thereby improving system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, etc.

The I2C interface is a two-way synchronization serial bus, and includes one serial data line (serial data line, SDA) and one serial clock line (serial clock line, SCL). In some embodiments, the processor 110 may include a plurality of sets of I2C buses. The processor 110 may be respectively coupled to the touch sensor 180K, a charger, a flash, the camera 193, and the like through different I2C bus interfaces. For example, the processor 110 may be coupled to the touch sensor 180K through the I2C interface, so that the processor 110 communicates with the touch sensor 180K through the I2C bus interface, to implement a touch function of the electronic device 100.

The I2S interface may be configured to perform audio communication. In some embodiments, the processor 110 may include a plurality of sets of I2S buses. The processor 110 may be coupled to the audio module 170 through the I2S bus, to implement communication between the processor 110 and the audio module 170. In some embodiments, the audio module 170 may transmit an audio signal to the wireless communication module 160 through the I2S interface, to implement a function of answering a call through a Bluetooth headset.

The PCM interface may also be used to perform audio communication, and perform sampling, quantization, and coding on an analog signal. In some embodiments, the audio module 170 may be coupled to the wireless communication module 160 through a PCM bus interface. In some embodiments, the audio module 170 may alternatively transmit an audio signal to the wireless communication module 160 through the PCM interface, to implement a function of answering a call through a Bluetooth headset. Both the I2S interface and the PCM interface may be used for audio communication.

The UART interface is a universal serial data bus, and is configured to perform asynchronous communication. The bus may be a two-way communication bus. The bus converts to-be-transmitted data between serial communication and parallel communication. In some embodiments, the UART interface is generally configured to connect the processor 110 to the wireless communication module 160. For example, the processor 110 communicates with a Bluetooth module in the wireless communication module 160 through the UART interface, to implement a Bluetooth function. In some embodiments, the audio module 170 may transmit an audio signal to the wireless communication module 160 through the UART interface, to implement a function of playing music through a Bluetooth headset.

The MIPI interface may be configured to connect the processor 110 to a peripheral component such as the display screen 194 or the camera 193. The MIPI interface includes a camera serial interface (camera serial interface, CSI), a display serial interface (display serial interface, DSI), and the like. In some embodiments, the processor 110 communicates with the camera 193 via the CSI, to implement a photographing function of the electronic device 100. The processor 110 communicates with the display screen 194 via the DSI interface, to implement a display function of the electronic device 100.

The GPIO interface may be configured by software. The GPIO interface may be configured as a control signal or a data signal. In some embodiments, the GPIO interface may be configured to connect the processor 110 to the camera 193, the display screen 194, the wireless communication module 160, the audio module 170, the sensor module 180, and the like. The GPIO interface may alternatively be configured as an I2C interface, an I2S interface, a UART interface, an MIPI interface, and the like.

The USB interface 130 is an interface that conforms to a USB standard specification, and may be specifically a mini USB interface, a micro USB interface, a USB type-C interface, and the like. The USB interface 130 may be configured to connect to a charger for charging the electronic device 100, or may be configured to transmit data between the electronic device 100 and a peripheral device, or may be configured to connect to a headset for playing audio through the headset. The interface may be further configured to connect to another electronic device such as an AR device.

It may be understood that an interface connection relationship between the modules that is shown in this embodiment of the present invention is merely an example for description, and does not constitute a structural limitation on the electronic device 100. In some other embodiments of this application, the electronic device 100 may alternatively use an interface connection method different from that in the embodiment described above, or use a combination of a plurality of interface connection methods.

The charging management module 140 is configured to receive a charging input from the charger. The charger may be a wireless charger or a wired charger. In some embodiments of wired charging, the charging management module 140 may receive a charging input of a wired charger through the USB interface 130. In some embodiments of wireless charging, the charging management module 140 may receive a wireless charging input through a wireless charging coil of the electronic device 100. The charging management module 140 supplies power to the electronic device through the power management module 141 while charging the battery 142.

A wireless communication function of the electronic device 100 may be implemented through the antenna 1, the antenna 2, the mobile communication module 150, the wireless communication module 160, the modem processor, the baseband processor, and the like.

The antenna 1 and the antenna 2 are configured to transmit and receive electromagnetic wave signals. Each antenna in the electronic device 100 may be configured to cover one or more communication frequency bands. Different antennas may also be reused to improve antenna utilization. For example, the antenna 1 may be reused as a diversity antenna of a wireless local area network. In some other embodiments, the antenna may be used in combination with a tuning switch.

The mobile communication module 150 may provide a solution applied to the electronic device 100 for wireless communications including 2G/3G/4G/5G and the like. The mobile communication module 150 may include at least one filter, a switch, a power amplifier, a low noise amplifier (low noise amplifier, LNA), and the like. The mobile communication module 150 may receive an electromagnetic wave via the antenna 1, perform processing such as filtering and amplification on the received electromagnetic wave, and transmit the electromagnetic wave to the modem processor for demodulation. The mobile communication module 150 may further amplify a signal modulated by the modem processor. The amplified signal is converted into an electromagnetic wave and radiated out via the antenna 1. In some embodiments, at least some functional modules of the mobile communication module 150 may be disposed in the processor 110. In some embodiments, at least some functional modules of the mobile communication module 150 and at least some modules of the processor 110 may be disposed in a same component.

The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. Next, the demodulator transmits the low-frequency baseband signal obtained through demodulation to the baseband processor for processing. The low-frequency baseband signal is processed by the baseband processor and then transmitted to the application processor. The application processor outputs a sound signal by an audio device (which is not limited to the speaker 170A, the receiver 170B, and the like), or displays an image or a video through the display screen 194. In some embodiments, the modem processor may be an independent component. In some other embodiments, the modem processor may be separate from the processor 110, and is disposed in a same device as the mobile communication module 150 or another functional module.

The wireless communication module 160 may provide a solution applied to the electronic device 100 for wireless communications including a wireless local area network (wireless local area network, WLAN) (such as a wireless fidelity (wireless fidelity, Wi-Fi) network), Bluetooth (Bluetooth, BT), a global navigation satellite system (global navigation satellite system, GNSS), frequency modulation (frequency modulation, FM), near field communication (near field communication, NFC), infrared (infrared, IR), and the like. The wireless communication module 160 may be one or more components integrating at least one communications processor module. The wireless communication module 160 receives an electromagnetic wave via the antenna 2, performs frequency modulation and filtering on the electromagnetic wave signal, and sends the processed signal to the processor 110. The wireless communication module 160 may further receive a to-be-sent signal from the processor 110, and perform frequency modulation and amplification on the signal. The amplified signal is converted into an electromagnetic wave and radiated out via the antenna 2.

In some embodiments, in the electronic device 100, the antenna 1 is coupled to the mobile communication module 150, and the antenna 2 is coupled to the wireless communication module 160, so that the electronic device 100 can communicate with a network and another device through a wireless communication technology. The wireless communication technology may include global system for mobile communications (global system for mobile communications, GSM), general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, GNSS, WLAN, NFC, FM, IR technology, and the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation system, SBAS).

The electronic device 100 may implement a display function through the GPU, the display screen 194, the application processor, and the like. The GPU is a microprocessor for image processing, and is connected to the display screen 194 and the application processor. The GPU is configured to perform mathematical and geometric computation, to implement image rendering. The processor 110 may include one or more GPUs, which execute program instructions to generate or change display information.

The display screen 194 is configured to display an image, a video, and the like. The display screen 194 includes a display panel. The display panels may be a liquid crystal display (liquid crystal display, LCD), an organic light-emitting diode (organic light-emitting diode, OLED), an active-matrix organic light emitting diode (active-matrix organic light emitting diode, AMOLED), a flex light-emitting diode (flex light-emitting diode, FLED), a mini-LED, a micro-LED, a micro-OLED, a quantum dot light emitting diode (quantum dot light emitting diode, QLED), and the like. In some embodiments, the electronic device 100 may include one or N display screens 194, where N is a positive integer greater than 1.

The electronic device 100 may implement a photographing function through the camera 193, the ISP, the video codec, the GPU, the display screen 194, the application processor, and the like.

The ISP is configured to process data fed back by the camera 193. For example, during photographing, a shutter is opened, and light is transmitted to a photosensitive element of the camera through a lens. An optical signal is converted into an electrical signal, and the photosensitive element of the camera transmits the electrical signal to the ISP for processing. The ISP converts the electrical signal into a visible image. The ISP may further perform algorithm optimization on noise, brightness, and complexion of the image. The ISP may further optimize parameters, such as exposure and color temperature of a photographing scenario. In some embodiments, the ISP may be disposed in the camera 193.

The camera 193 is configured to capture a still image or a video. An optical image of an object is generated through the lens, and is projected onto the photosensitive element. The photosensitive element may be a charge coupled device (charge coupled device, CCD) or a complementary metal-oxide-semiconductor (complementary metal-oxide-semiconductor, CMOS) phototransistor. The light-sensitive element converts an optical signal into an electrical signal, and then transmits the electrical signal to the ISP. The ISP converts the electrical signal into a digital image signal. The ISP outputs the digital image signal to the DSP for processing. The DSP converts the digital image signal into an image signal in a standard format such as RGB or YUV In some embodiments, the electronic device 100 may include one or N cameras 193, where N is a positive integer greater than 1.

The digital signal processor is configured to process a digital signal, including a digital image signal and other types of digital signal. For example, when the electronic device 100 selects a frequency, the digital signal processor is configured to perform Fourier transform on frequency energy.

The video codec is configured to compress or decompress a digital video. The electronic device 100 may support one or more video codecs. In this way, the electronic device 100 may play back or record videos in a plurality of coding formats, for example, moving picture experts group (moving picture experts group, MPEG) 1, MPEG2, MPEG3, and MPEG4.

The NPU is a neural-network (neural-network, NN) computing processor, which quickly processes input information by referring to a biological neural network structure, for example, by referring to a transmission pattern between neurons in human brain, and may further continuously perform self-learning. The NPU may implement applications including intelligent cognition of the electronic device 100, such as image recognition, facial recognition, speech recognition, and text understanding.

The internal memory 121 may include one or more random access memories (random access memory, RAM) and one or more non-volatile memories (non-volatile memory, NVM).

The random access memory may include a static random access memory (static random-access memory, SRAM), a dynamic random access memory (dynamic random access memory, DRAM), a synchronous dynamic random access memory (synchronous dynamic random access memory, SDRAM), a double data rate synchronous dynamic random access memory (double data rate synchronous dynamic random access memory, DDR SDRAM, e.g., a fifth generation DDR SDRAM, generally referred to as a DDR5 SDRAM), and the like.

The non-volatile memory may include a magnetic disk storage device and a flash memory (flash memory).

The flash memory may be classified into an NOR flash, an NAND flash, a 3D NAND flash, and the like according to an operation principle; or may be classified into a single-level cell (single-level cell, SLC), a multi-level cell (multi-level cell, MLC), a triple-level cell (triple-level cell, TLC), a quad-level cell (quad-level cell, QLC), and the like based on electric potential levels of a cell; or may be classified into a universal flash storage (English: universal flash storage, UFS), an embedded multi media card (embedded multi media Card, eMMC), and the like according to storage specifications.

The random access memory may be directly read and written by the processor 110. The random access memory may be configured to store an operating system or an executable program (for example, a machine instruction) of another running program, and may be further configured to store user data, application data, and the like.

The non-volatile memory may further store an executable program, user data, application data, and the like. The program and data may be loaded into the random access memory in advance for directly reading and writing by the processor 110.

The external memory interface 120 may be configured to connect to an external non-volatile memory, to expand a storage capacity of the electronic device 100. The external non-volatile memory communicates with the processor 110 through the external memory interface 120, to implement a data storage function. For example, files such as music and videos are stored in the external non-volatile memory.

The electronic device 100 may implement an audio function, for example, music playing and recording, through the audio module 170, the speaker 170A, the receiver 170B, the microphone 170C, the headset jack 170D, the application processor, and the like.

The audio module 170 is configured to convert digital audio information into an analog audio signal for output, and is further configured to convert analog audio input into a digital audio signal. The audio module 170 may be further configured to code and decode an audio signal. In some embodiments, the audio module 170 may be disposed in the processor 110, or some functional modules of the audio module 170 are disposed in the processor 110.

The speaker 170A, also referred to as a "loudspeaker", is configured to convert an audio electrical signal into a sound signal. The electronic device 100 may be used to listen to music or answer a call in a hands-free mode over the speaker 170A.

The receiver 170B, also referred to as an "earpiece", is configured to convert an electrical audio signal into a sound signal. When a call is answered or speech information is received through the electronic device 100, the receiver 170B may be put close to a human ear to listen to a voice.

The microphone 170C, also referred to as a "mike" or a "mic", is configured to convert a sound signal into an electrical signal. When making a call or sending a voice message, a user may make a sound near the microphone 170C through his mouth, to input a sound signal to the microphone 170C. At least one microphone 170C may be disposed in the electronic device 100. In some other embodiments, two microphones 170C may be disposed in the electronic device 100, to collect a sound signal and implement a noise reduction function. In some other embodiments, three, four, or more microphones 170C may alternatively be disposed in the electronic device 100, to collect a sound signal, implement noise reduction, and identify a sound source, to implement a directional recording function and the like.

The headset jack 170D is configured to connect to a wired headset. The headset jack 170D may be a USB interface 130, or may be a 3.5 mm open mobile terminal platform (open mobile terminal platform, OMTP) standard interface or a cellular telecommunications industry association of the USA (cellular telecommunications industry association of the USA, CTIA) standard interface.

The pressure sensor 180A is configured to sense a pressure signal, and can convert the pressure signal into an electrical signal. In some embodiments, the pressure sensor 180A may be disposed in the display screen 194. There are a plurality of types of pressure sensors 180A, such as a resistive pressure sensor, an inductive pressure sensor, and a capacitive pressure sensor. The capacitive pressure sensor may include at least two parallel plates made of conductive materials. When a force is applied to the pressure sensor 180A, capacitance between electrodes changes. The electronic device 100 determines pressure intensity based on the change in the capacitance. When a touch operation is performed on the display screen 194, the electronic device 100 detects an intensity of the touch operation through the pressure sensor 180A. The electronic device 100 may further calculate a touch location based on a detection signal of the pressure sensor 180A. In some embodiments, touch operations that are performed in a same touch location with different touch operation intensities may correspond to different operation instructions. For example, when a touch operation is performed on a Messages application icon with a touch operation intensity less than a first pressure threshold, an instruction for viewing an SMS message is performed. When a touch operation is performed on the Messages application icon with a touch operation intensity greater than or equal to the first pressure threshold, an instruction for creating a new SMS message is performed.

The gyro sensor 180B may be configured to determine a moving posture of the electronic device 100. In some embodiments, an angular velocity of the electronic device 100 around three axes (namely, axes x, y, and z) may be determined through the gyro sensor 180B. The gyro sensor 180B may be configured to implement image stabilization during photographing. For example, when the shutter is pressed, the gyro sensor 180B detects an angle at which the electronic device 100 jitters, calculates, based on the angle, a distance for which a lens module needs to compensate, and allows a lens to cancel the jitter of the electronic device 100 through reverse motion, to implement image stabilization. The gyro sensor 180B may also be used in a navigation scenario and a somatic game scenario.

The barometric pressure sensor 180C is configured to measure barometric pressure. In some embodiments, the electronic device 100 calculates an altitude through the barometric pressure measured by the barometric pressure sensor 180C, to assist in positioning and navigation.

The magnetic sensor 180D includes a Hall sensor. The electronic device 100 may detect opening and closing of a flip leather case through the magnetic sensor 180D. In some embodiments, when the electronic device 100 is a clamshell phone, the electronic device 100 may detect opening and closing of a flip cover based on the magnetic sensor 180D. Further, a feature such as automatically unlocking when flipping is set based on a detected opening or closing state of the leather case or a detected opening or closing state of the flip cover.

The acceleration sensor 180E may detect accelerations in various directions (generally in three axes) of the electronic device 100. When the electronic device 100 is still, a magnitude and a direction of gravity may be detected. The acceleration sensor 180E may be further configured to identify a posture of the electronic device, and is used in applications including switching between a landscape mode and a portrait mode and a pedometer application.

The distance sensor 180F is configured to measure a distance. The electronic device 100 may measure the distance in an infrared manner or in a laser manner. In some embodiments, in a photographing scenario, the electronic device 100 may measure a distance through the distance sensor 180F to implement quick focusing.

The optical proximity sensor 180G may include, for example, a light emitting diode (LED) and a photodetector, for example, a photodiode. The light emitting diode may be an infrared light emitting diode. The electronic device 100 emits infrared light through the light-emitting diode. The electronic device 100 detects infrared reflected light from a nearby object through the photodiode. When sufficient reflected light is detected, it may be determined that there is an object near the electronic device 100. When insufficient reflected light is detected, the electronic device 100 may determine that there is no object near the electronic device 100. The electronic device 100 may detect, through the optical proximity sensor 180G, that a user holds the electronic device 100 close to an ear for a call, to automatically turn off a screen for power saving. The optical proximity sensor 180G may also be used in a smart cover mode or a pocket mode to automatically perform screen unlocking or locking.

The ambient light sensor 180L is configured to sense ambient light brightness. The electronic device 100 may adaptively adjust brightness of the display screen 194 based on the sensed ambient light brightness. The ambient light sensor 180L may further be configured to automatically adjust white balance during photographing. The ambient light sensor 180L may also cooperate with the optical proximity sensor 180G to detect whether the electronic device 100 is in a pocket, to avoid an accidental touch.

The fingerprint sensor 180H is configured to collect a fingerprint. The electronic device 100 may use a feature of the collected fingerprint to implement fingerprint-based unlocking, application lock access, fingerprint-based photographing, fingerprint-based call answering, and the like.

The temperature sensor 180J is configured to detect a temperature. In some embodiments, the electronic device 100 executes a temperature processing policy through the temperature detected by the temperature sensor 180J. For example, when the temperature reported by the temperature sensor 180J exceeds a threshold, the electronic device 100 lowers performance of a processor near the temperature sensor 180J, to reduce power consumption for thermal protection. In some other embodiments, when the temperature is less than another threshold, the electronic device 100 heats the battery 142 to prevent the electronic device 100 from being shut down abnormally due to a low temperature. In some other embodiments, when the temperature is lower than still another threshold, the electronic device 100 boosts an output voltage of the battery 142 to avoid abnormal shutdown caused by a low temperature.

The touch sensor 180K is also referred to as a "touch component". The touch sensor 180K may be disposed in the display screen 194, and the touch sensor 180K and the display screen 194 constitute a touchscreen, which is also referred to as a "touch panel". The touch sensor 180K is configured to detect a touch operation performed on or near the touch sensor. The touch sensor may transfer the detected touch operation to the application processor to determine a type of the touch event. A visual output related to the touch operation may be provided through the display screen 194. In some other embodiments, the touch sensor 180K may also be disposed on a surface of the electronic device 100 at a location different from that of the display screen 194.

The bone conduction sensor 180M may obtain a vibration signal. In some embodiments, the bone conduction sensor 180M may obtain a vibration signal of a vibrating bone of a human vocal-cord part. The bone conduction sensor 180M may also be in contact with a body pulse to receive a blood pressure beating signal. In some embodiments, the bone conduction sensor 180M may also be disposed in the headset, forming a bone conduction headset. The audio module 170 may obtain a speech signal through parsing based on the vibration signal that is of the vibrating bone of the vocal-cord part and that is obtained by the bone conduction sensor 180M, to implement a speech function. The application processor may parse heart rate information based on the blood pressure beating signal obtained by the bone conduction sensor 180M, to implement a heart rate detection function.

The key 190 includes a power key, a volume key, and the like. The key 190 may be a mechanical key, or may be a touch key. The electronic device 100 may receive a key input, and generate a key signal input related to a user setting and function control of the electronic device 100.

The motor 191 may generate a vibration prompt. The motor 191 may be configured to provide an incoming call vibration prompt and a touch vibration feedback. For example, touch operations performed on different applications (for example, photographing and audio playback) may correspond to different vibration feedback effects. The motor 191 may also provide different vibration feedback effects corresponding to touch operations performed on different areas of the display screen 194. Different application scenarios (for example, a time reminder, information receiving, an alarm clock, and a game) may also correspond to different vibration feedback effects. A touch vibration feedback effect may be further customized.

The indicator 192 may be an indicator light, and may be configured to indicate a charging status and a power change, or may be configured to indicate a message, a missed call, a notification, and the like.

The SIM card interface 195 is configured to connect to a SIM card. The SIM card may be inserted into the SIM card interface 195 or removed from the SIM card interface 195, to implement contact with or detaching from the electronic device 100. The electronic device 100 may support one or N SIM card interfaces, where N is a positive integer greater than 1. The SIM card interface 195 may support a nano-SIM card, a micro-SIM card, a SIM card, and the like. A plurality of cards may be inserted into a same SIM card interface 195 at the same time. The plurality of cards may be of a same type or different types. The SIM card interface 195 may be compatible with different types of SIM cards. The SIM card interface 195 may also be compatible with an external storage card. The electronic device 100 interacts with a network through the SIM card, to implement functions such as conversation and data communication. In some embodiments, the electronic device 100 uses an eSIM, that is, an embedded SIM card. The eSIM card may be embedded into the electronic device 100, and cannot be detached from the electronic device 100.

A software system of the electronic device 100 may use a layered architecture, an event-driven architecture, a microkernel architecture, a micro service architecture, or a cloud architecture. In an embodiment of the present invention, an Android system of a layered architecture is used as an example to illustrate the software structure of the electronic device 100.

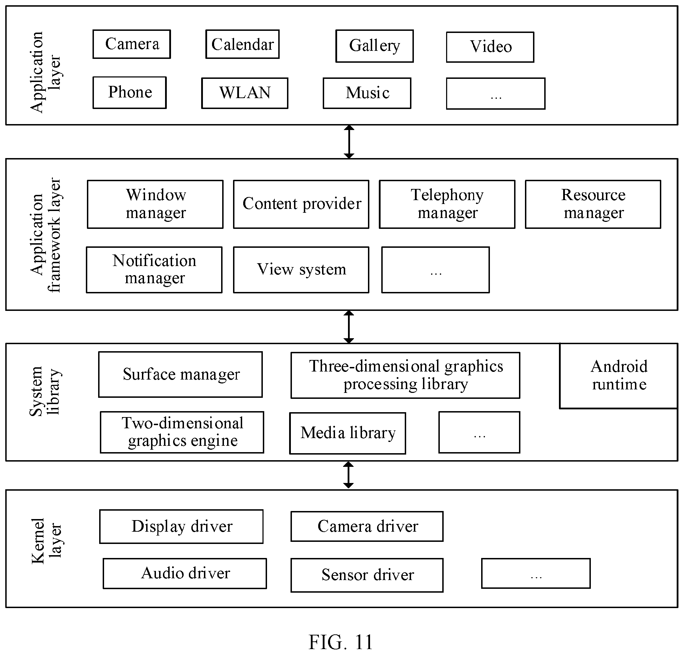

FIG. 11 is a block diagram of the software structure of the electronic device 100 according to the embodiment of the present invention.

In a layered architecture, software is divided into several layers, and each layer has a clear role and responsibilities. The layers communicate with each other through software interfaces. In some embodiments, an Android system is divided into four layers from top to bottom: an application layer; an application framework layer; an Android runtime (Android runtime) and a system library; and a kernel layer.

The application layer may include a series of application packages.

As shown in FIG. 11, the application layer may include applications such as Camera, Gallery, Calendar, Phone, Map, Navigation, WLAN, Bluetooth, Music, Video, and Messages.

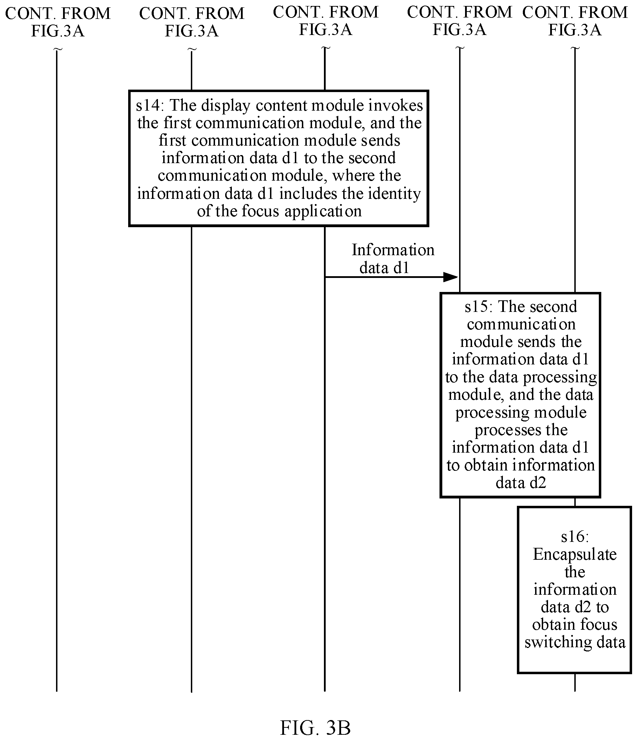

In some embodiments, the application layer may perform cross-process communication with the application framework layer. The application layer may convert data received from the electronic device 200 into data that can be read and written by the application framework layer. The application layer may receive, through cross-process communication, data sent by the application framework layer, and convert the received data from the application framework layer into data that can be read and written by the electronic device 200. Specifically, the application layer may perform steps s15 and s16 shown in FIG. 3B in embodiments of this application.

The application framework layer provides an application programming interface (application programming interface, API) and a programming framework for the applications in the application layer. The application framework layer includes some predefined functions.

As shown in FIG. 11, the application framework layer may include a window manager, a content provider, a view system, a telephony manager, a resource manager, a notification manager, and the like.

The window manager is configured to manage a windowing program. The window manager may obtain a size of a display screen, determine whether there is a status bar, perform screen locking, perform screen capturing, and so on.

The content provider is configured to store and retrieve data and make the data accessible to an application. The data may include a video, an image, audio, phone calls made and answered, a browsing history, favorites, a phone book, etc.

The view system includes a visual control, for example, a control for displaying text or a control for displaying a picture. The view system may be configured to build an application. A display interface may include one or more views. For example, a display interface including an SMS notification icon may include a view for displaying text and a view for displaying a picture.

The telephony manager is configured to provide a communication function for the electronic device 100. For example, the communication function includes call status management (including call connection, hang-up, and the like).

The resource manager provides a variety of resources, such as localized character strings, icons, pictures, layout files, and video files, for applications.

The notification manager enables an application to display a notification message in a status bar. The notification messages may be used to convey an informative message that may disappear automatically after a short period of time, and no user interaction is required. For example, the notification manager is used for informing completion of downloading, for message alerts, and so on. The notification manager may alternatively provide, on a status bar at the top of the system, a notification in a form of a chart or scroll bar text, for example, a notification of an application running in the background, or provide, on a screen, a notification in a form of a dialog window. For example, text information is displayed in the status bar, a prompt tone is generated, an electronic device vibrates, and an indicator light blinks.

In some embodiments, the application framework layer may invoke to set a focus application, and generate focus switching data by collaborating with the application layer when it is detected that the focus application changes. Specifically, the application framework layer may perform in embodiments of this application: steps S101 and S102 shown in FIG. 2, steps s11, s12, s131, s132, s133, and s14 shown in FIG. 3A and FIG. 3B, and step S204 shown in FIG. 7.

The Android runtime includes a kernel library and a virtual machine. The Android runtime is responsible for scheduling and managing an Android system.

The kernel library includes two parts: one part being functional functions that java needs to call, and the other part being an Android kernel library.

The application layer and the application framework layer run in the virtual machine. The virtual machine executes java files of the application layer and the application framework layer as binary files. The virtual machine is configured to implement functions such as object life cycle management, stack management, thread management, security and exception management, and garbage collection.

The system library may include a plurality of functional modules. For example, the functional modules include a surface manager (surface manager), a media library (Media Library), a three-dimensional graphics processing library (for example, OpenGL ES), and a 2D graphics engine (for example, SGL).

The surface manager is configured to manage a display subsystem and provide fusion of 2D and 3D layers for a plurality of applications.

The media library supports playback and recording in a plurality of commonly used audio and video formats, and static image files. The media library may support a plurality of audio and video encoding formats, such as MPEG4, H.264, MP3, AAC, AMR, JPG, and PNG.

The three-dimensional graphics processing library is configured to implement three-dimensional drawing, image rendering, compositing, and layer processing.

The 2D graphics engine is a drawing engine for 2D drawing.

The kernel layer is a layer between hardware and software. The kernel layer includes at least a display driver, a camera driver, an audio driver, and a sensor driver.

The following describes an example of a workflow of software and hardware of the electronic device 100 with reference to a photographing scenario.

When the touch sensor 180K receives a touch operation, a corresponding hardware interrupt is sent to the kernel layer. The kernel layer processes the touch operation into an original input event (including information such as touch coordinates and a time stamp of the touch operation). The original input event is stored at the kernel layer. The application framework layer obtains the original input event from the kernel layer, and identifies a control corresponding to the input event. An example in which the touch operation is a touch click operation, and a control corresponding to the touch click operation is a control of a camera application icon is used. The camera application invokes an interface of the application framework layer to start the camera application, then starts the camera driver by invoking the kernel layer, and captures a still image or a video through the camera 193.

The foregoing descriptions about implementations allow a person skilled in the art to understand that, for the purpose of convenient and brief description, division of the foregoing functional modules is taken as an example for illustration. In actual application, the foregoing functions can be allocated to different modules to implement as appropriate, that is, an internal structure of an apparatus is divided into different functional modules to implement all or some of the functions described above. For a detailed workflow of the foregoing system, apparatus, and unit, refer to a corresponding process in the foregoing method embodiments, and details are not described herein again.

Functional units in embodiments of this application may be integrated into one processing unit, or each of the units may physically exist alone, or two or more units may be integrated into one unit. The integrated unit may be implemented in a form of hardware, or may be implemented in a form of a software functional unit.

If the integrated unit is implemented in the form of the software functional unit and sold or used as an independent product, the integrated unit may be stored in a computer-readable storage medium. Based on such an understanding, technical solutions of embodiments of this application essentially, or the part contributing to the conventional technology, or all or some of the technical solutions may be implemented in a form of a software product. The computer software product is stored in a storage medium and includes several instructions for enabling a computer device (which may be a personal computer, a server, a network device, and the like) or a processor to perform all or some of the steps of the methods described in embodiments of this application. The foregoing storage medium includes any medium that can store program code, such as a flash memory, a removable hard disk, a read-only memory, a random access memory, a magnetic disk, or an optical disc.

The foregoing descriptions are merely specific implementations of this application, and are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A focus synchronization method, applied to a communication system, wherein the communication system comprises a first electronic device and a second electronic device, and a communication connection is established between the first electronic device and the second electronic device; and the method comprises:
displaying, by the second electronic device, a plurality of windows, wherein each of the plurality of windows displays a user interface of an application; the application is installed and runs on the first electronic device; a first window in the plurality of windows displays a first user interface of a first application, a second user interface of the first application is displayed on the first electronic device, and the first user interface and the second user interface have a same user interface element; a second window in the plurality of windows is a focus window, and the second window displays a user interface of a second application; and the second application is a focus application of the first electronic device;
detecting, by the first electronic device, a first focus switching event, and switching the focus application from the second application to a third application; and
setting, by the second electronic device, a third window as the focus window, wherein the third window is a window for displaying a user interface of the third application.

2. The method according to claim 1, wherein the method further comprises:
when the focus application is the second application:
detecting, by the second electronic device, a first user input; and
updating, by the second electronic device, the user interface of the second application; and
when the focus application is the third application:
detecting, by the second electronic device, a second user input; and
updating, by the second electronic device, the user interface of the third application.

3. The method according to claim 1, wherein after the switching the focus application from the second application to a third application, the method further comprises:
detecting, by the first electronic device, a second focus switching event, and switching the focus application from the third application to the first application;
setting, by the second electronic device, the first window as the focus window;
detecting, by the second electronic device, a third user input;
updating, by the second electronic device, the first user interface of the first application; and
updating, by the first electronic device, the second user interface of the first application.

4. The method according to claim 2, wherein after the detecting, by the second electronic device, a first user input, and before the updating, by the second electronic device, the user interface of the second application, the method further comprises:
sending, by the second electronic device to the first electronic device, a first data packet generated based on the first user input;
processing, by the first electronic device, data of the second application based on the first data packet, to obtain first display data of the second application; and
sending, by the first electronic device, the first display data to the second electronic device.

5. The method according to claim 4, wherein the updating, by the second electronic device, the user interface of the second application comprises:
updating, by the second electronic device, the user interface of the second application from a third user interface to a fourth user interface based on the first display data, wherein the third user interface is different from the fourth user interface.

6. The method according to claim 2, wherein after the detecting, by the second electronic device, a second user input, and before the updating, by the second electronic device, the user interface of the third application, the method further comprises:
sending, by the second electronic device to the first electronic device, a second data packet generated based on the second user input;
processing, by the first electronic device, data of the third application based on the second data packet, to obtain second display data of the third application; and
sending, by the first electronic device, the second display data to the second electronic device.

7. The method according to claim 6, wherein the updating, by the second electronic device, the user interface of the third application comprises:
updating, by the second electronic device, the user interface of the third application from a fifth user interface to a sixth user interface based on the second display data, wherein the fifth user interface is different from the sixth user interface.

8. The method according to claim 2, wherein the first user input is the same as the second user input, and the first user input and the second user input are pressing operations on a first key.

9. The method according to any one of claims 1 to 8, wherein after the switching the focus application from the second application to a third application, and before the setting, by the second electronic device, a third window as the focus window, the method further comprises:
displaying, by the first electronic device, the user interface of the third application; and
sending, by the first electronic device, first focus switching data to the second electronic device, wherein the first focus switching data is generated by the first electronic device in response to the first focus switching event.

10. The method according to claim 9, wherein the first electronic device stores a reference status identifier and a reference identity, and after the switching the focus application from the second application to a third application, and before the sending, by the first electronic device, first focus switching data to the second electronic device, the method further comprises:
if the reference status identifier is a first status identifier and a first identity of the third application is different from the reference identity, updating the reference status identifier to a second status identifier; or
if the reference status identifier is a second status identifier, generating the first focus switching data based on the first identity, wherein
if the reference status identifier is the first status identifier, it indicates that before the first electronic device switches the focus application to the third application, the first electronic device sets the second application as the focus application based on third focus switching data sent by the second electronic device; and
if the reference status identifier is the second status identifier, it indicates that before the first electronic device switches the focus application to the third application, the first electronic device sets the second application as the focus application based on a third focus switching event detected by the first electronic device.

11. The method according to any one of claims 1 to 8, wherein after the second electronic device sets the second window as the focus window, and before the switching the focus application from the second application to a third application, the method further comprises:
sending, by the second electronic device, second focus switching data to the first electronic device, wherein the second focus switching data is generated by the second electronic device in response to the first focus switching event.

12. The method according to claim 11, wherein the first electronic device stores a reference status identifier and a reference identity, and after the switching the focus application from the second application to a third application, the method further comprises:
updating the reference status identifier to a first status identifier; and
updating the reference identity to an identity of the third application, wherein
if the reference status identifier is the first status identifier, it indicates that the focus application is set by the first electronic device based on fourth focus switching data sent by the second electronic device; and
if the reference status identifier is a second status identifier, it indicates that the focus application is set by the first electronic device based on a fourth focus switching event detected by the first electronic device.

13. The method according to any one of claims 1 to 12, wherein the setting, by the second electronic device, a third window as the focus window comprises:
marking, by the second electronic device, the third window.

14. The method according to claim 13, wherein the marking, by the second electronic device, the third window comprises one or more of the following:
setting, by the second electronic device, a title bar of the third window to a highlighted state; and
adjusting, by the second electronic device, a transparency of the third window.

15. The method according to claim 9, wherein after the sending, by the first electronic device, first focus switching data to the second electronic device, the method further comprises:
determining, by the second electronic device, that the plurality of windows meet a preset condition.

16. The method according to claim 9, wherein before the sending, by the first electronic device, first focus switching data to the second electronic device, the method further comprises:
obtaining, by the first electronic device, status data of the plurality of windows; and
determining, by the first electronic device based on the status data, that the plurality of windows meet a preset condition.

17. The method according to claim 15 or 16, wherein the preset condition comprises one or more of the following:
the plurality of windows do not comprise a full-screen window; and
none of the plurality of windows is in a media playback state.

18. The method according to claim 1, wherein before the detecting, by the first electronic device, a first focus switching event, the plurality of windows comprise the third window, and the third window displays the user interface of the third application.

19. A communication system, wherein the communication system comprises a first electronic device and a second electronic device, the first electronic device and/or the second electronic device comprise/comprises one or more processors and a memory, the memory is coupled to the one or more processors, the memory is configured to store computer program code, the computer program code comprises computer instructions, and the one or more processors invoke the computer instructions to enable the first electronic device and/or the second electronic device to perform the method according to any one of claims 1 to 18.

20. A computer program product comprising instructions, wherein when the computer program product runs on an electronic device, the electronic device is enabled to perform the method according to any one of claims 1 to 18.

21. A computer-readable storage medium, comprising instructions, wherein when the instructions are run on an electronic device, the electronic device is enabled to perform the method according to any one of claims 1 to 18.
